# EUROPEAN PATENT SPECIFICATION

(11) **EP 4 461 782 B1**
(45) Date of publication and mention of the grant of the patent: **19.08.2026**
(21) Application number: 23911342.6
(22) Date of filing: 17.10.2023
(51) Int. Cl.: C09K 5/04, F25B 9/00

(54) **COMPOSITION CONTAINING REFRIGERANT, USE OF SAID COMPOSITION, REFRIGERATION METHOD USING SAID COMPOSITION, AND REFRIGERATION UNIT AND REFRIGERATOR CONTAINING SAID COMPOSITION**
ZUSAMMENSETZUNG MIT KÜHLMITTEL, VERWENDUNG DIESER ZUSAMMENSETZUNG, KÜHLVERFAHREN MIT DIESER ZUSAMMENSETZUNG SOWIE KÜHLEINHEIT UND KÜHLSCHRANK MIT DIESER ZUSAMMENSETZUNG
COMPOSITION CONTENANT UN RÉFRIGÉRANT, UTILISATION DE LADITE COMPOSITION, PROCÉDÉ DE RÉFRIGÉRATION UTILISANT LADITE COMPOSITION, ET UNITÉ DE RÉFRIGÉRATION ET RÉFRIGÉRATEUR CONTENANT LADITE COMPOSITION

(30) Priority: 28.12.2022 JP 2022212595
(43) Date of publication of application: 13.11.2024
(73) Proprietor: DAIKIN INDUSTRIES, LTD., Osaka-shi, Osaka 530-0001 (JP)
(72) Inventor: SANTA, Kaito, Osaka-Shi, Osaka 530-0001 (JP); ITANO, Mitsushi, Osaka-Shi, Osaka 530-0001 (JP); GOTOU, Tomoyuki, Osaka-Shi, Osaka 530-0001 (JP); YOSHIMURA, Takashi, Osaka-Shi, Osaka 530-0001 (JP); USUI, Takashi, Osaka-Shi, Osaka 530-0001 (JP); NAKAUE, Tsubasa, Osaka-Shi, Osaka 530-0001 (JP)
(74) Representative: Hoffmann Eitle
(86) International application number: PCT/JP2023/037600
(87) International publication number: WO 2024/142558

(56) References cited:
- WO-A1-2015/115252
- WO-A1-2015/186557
- WO-A1-2015/186670
- WO-A1-2015/186671
- WO-A1-2019/208382
- JP-A- 2015 229 767
- US-A1- 2021 079 280
- US-A1- 2021 262 700
- US-A1- 2022 106 242

## Description

### Technical Field

The present disclosure relates to a composition comprising a refrigerant, use of the composition, a refrigeration method using the composition, and a refrigeration apparatus and a refrigerating machine comprising the composition.

### Background Art

A working medium for thermal cycling that contains trifluoroethylene (HFO-1123) and 1,2-difluoroethylene (HFO-1132)has been proposed as a working medium for thermal cycling that can replace R410A (PTL 1). PTL2 discloses as a working fluid to be used for a heat cycle system, a working fluid containing trifluoroethylene, difluoromethane, and at least one selected from 1,1-difluoroethane, fluoroethane, propane, propylene, carbon dioxide, 2,3,3,3-tetrafluoropropene, and (E)-1,3,3,3-tetrafluoropropene at mass ratios satisfying predetermined expressions and at a ratio of the total content to be 90 to 100 mass % relative to the total amount of the working fluid. The working fluid disclosed therein has a temperature glide of 10° C or less. PTL 3 and PTL 4 each disclose a composition for heat cycle systems comprising HFO-1132(E) and HFC-152a or HFO-1132(E) and HFC-32.

### Citation List

### Patent Literature

PTL 1: WO2015/141678
PTL 2: US2021/262700A1
PTL 3: WO 2015/186670
PTL 4: WO 2015/186671

### Summary of Invention

### Technical Problem

An object of the present disclosure is to provide a novel low-GWP mixed refrigerant.

### Solution to Problem

In one aspect, the present invention relates to a composition comprising a refrigerant,
wherein the refrigerant comprises a component X, 1,1-difluoroethane (HFC-152a), and carbon dioxide (CO₂), and
the component X consists only of trans-1,2-difluoroethylene (HFO-1132(E) or consists only of trans-1,2-difluoroethylene (HFO-1132(E) trifluoroethylene (HFO-1123).

In one embodiment, the present invention relates to a composition according the above aspect,
wherein the refrigerant optionally further comprises R32,
when the mass% of the component X, R32, HFC-152a, and CO₂ in the refrigerant based on their sum are respectively represented by x, y, z, and a (wherein 0 < a ≤ 10.0), in a ternary composition diagram in which the sum of the component X, R32, and HFC-152a is (100-a) mass%,
coordinates (x,y,z) are, when 0 < a ≤ 4.75, within the range of a figure surrounded by straight lines CD, DO, OB, BA, and AC that connect the following 5 points:
   point C (60.0, -a+40.0, 0.0),
   point D (57.0, 0.0, -a+43.0),
   point O (0.0, 0.0, -a+100),
   point B (0.0, -0.0257a²+0.3536a+50.00, 0.0257a²-1.3536a+50.00), and
   point A (-a+40.8, 59.2, 0.0), or

on the straight lines CD, DO, and BA (excluding the points C, O, B, and A), and
   the coordinates (x,y,z) are, when 4.75 < a ≤ 10.0, within the range of a figure surrounded by straight lines CD, DO, OB, BA, and AC that connect the following 5 points:
   point C (60.0, -a+40.0, 0.0),
   point D (57.0, 0.0, -a+43.0),
   point O (0.0, 0.0, -a+100),
   point B (0.0, -0.0137a²+0.4304a+49.364, 0.0137a²-1.4304a+50.636), and
   point A (-a+40.8, 59.2, 0.0), or
on the straight lines CD, DO, and BA (excluding the points C, O, B, and A).
   In one embodiment, the present invention relates to a composition according to the above embodiment,
   wherein when the mass% of the component X, R32, HFC-152a, and CO₂ in the refrigerant based on their sum are respectively represented by x, y, z, and a (wherein 0 < a ≤ 10.0), in a ternary composition diagram in which the sum of the component X, R32, and HFC-152a is (100-a) mass%,
   coordinates (x,y,z) are, when 0 < a ≤ 4.75, within the range of a figure surrounded by straight lines CD, DE, EE', E'F, FB, BA and AC that connect the following 7 points:
      point C (60.0, -a+40.0, 0.0)
      point D (57.0, 0.0, -a+43.0),
      point E (-0.0046a²-3.3676a+50.70, 0.0, 0.0046a²+2.3676a+49.30),
      point E' (-0.0019a²-2.5595a+12.2, -0.0013a²-0.373a+34.7, 0.0032a²+1.9325a+53.1),
      point F (0.0, -0.0102a²-3.0461a+47.6, 0.0102a²+2.0461a+52.4),
      point B (0.0, -0.0257a²+0.3536a+50.00, 0.0257a²-1.3536a+50.00), and
      point A (-a+40.8, 59.2, 0.0), or
on the straight lines CD, DE, EE', E'F, and BA (excluding the points C, F, B, and A), and
   the coordinates (x,y,z) are, when 4.75 < a ≤ 10.0, within the range of a figure surrounded by straight lines CD, DE, EE', EF, FB, BA and AC that connect the following 6 points:
   point C (60.0, -a+40.0, 0.0)
   point D (57.0, 0.0, -a+43.0),
   point E (0.0018a²-3.5313a+51.333, 0.0, - 0.0018a²+2.5313a+48.667),
   point F (0.0, -0.0188a²-2.9037a+47.117, 0.0188a²+1.9037a+52.883),
   point B (0.0, -0.0137a²+0.4304a+49.364, 0.0137a²-1.4304a+50.636), and
   point A (-a+40.8, 59.2, 0.0), or
on the straight lines CD, DE, EF, FB, and BA (excluding the points C, F, B, and A).
   In one embodiment, the present invention relates to a composition according to an above embodiment,
   wherein when the mass% of the component X, R32, HFC-152a, and CO₂ in the refrigerant based on their sum are respectively represented by x, y, z, and a (wherein 0 < a ≤ 10.0), in a ternary composition diagram in which the sum of the component X, R32, and HFC-152a is (100-a) mass%,
   coordinates (x,y,z) are, when 0 < a ≤ 4.75, within the range of a figure surrounded by straight lines CD, DE, EE', and E'A' that connect the following 5 points:
      point C (60.0, -a+40.0, 0.0)
      point D (57.0, 0.0, -a+43.0),
      point E (-0.0046a²-3.3676a+50.70, 0.0, 0.0046a²+2.3676a+49.30),
      point E' (-0.0019a²-2.5595a+12.2, -0.0013a²-0.373a+34.7, 0.0032a²+1.9325a+53.1), and
      point A' (-a+55.6, 44.4, 0.0), or
on the straight lines CD, DE, EE', and E'A', and
   the coordinates (x,y,z) are, when 4.75 < a ≤ 10.0, within the range of a figure surrounded by straight lines CD, DE, EF, FB', and B'A' that connect the following 6 points:
   point C (60.0, -a+40.0, 0.0)
   point D (57.0, 0.0, -a+43.0),
   point E (0.0018a²-3.5313a+51.333, 0.0, - 0.0018a²+2.5313a+48.667),
   point F (0.0, -0.0188a²-2.9037a+47.117, 0.0188a²+1.9037a+52.883),
   point B' (0.0, -0.0137a²+0.4304a+31.164, 0.0137a²-1.4304a+68.836), and
   point A' (-a+55.6, 44.4, 0.0), or
on the straight lines CD, DE, EF, and FA' (excluding the points C, F, and A').

In one embodiment, the present invention relates to a composition according to an above embodiment, comprising a refrigerant,
wherein the refrigerant comprises a component X, R32, HFC-152a, and CO₂,
the component X consists only of HFO-1132(E) or consists only of HFO-1132(E) and HFO-1123, and
when the mass% of the component X, R32, HFC-152a, and CO₂ in the refrigerant based on their sum are respectively represented by x, y, z, and a (wherein 0 < a ≤ 10.0), in a ternary composition diagram in which the sum of the component X, R32, and HFC-152a is (100-a) mass%,
coordinates (x,y,z) are, when 0 < a ≤ 3.3, within the range of a figure surrounded by straight lines D'D, DJ, JK, and KD' that connect the following 4 points:
   point D' (0.0178a²-0.0285a+58.3, -0.0455a²+0.4227a+14.3, 0.0411a²-1.6206a+42.7)
   point D (57.0, 0.0, -a+43.0),
   point J (0.3041a²-8.5491a+28.2, 0.0, - 0.3041a²+7.5491a+71.8), and
   point K (0.254a²-6.6564a+19.2, 0.0568a²-1.2784a+9.0, - 0.3108a²+6.9348a+71.8), or

on the straight lines D'D, DJ, JK, and KD', and
   the coordinates (x,y,z) are, when 3.3 < a ≤ 3.9, within the range of a figure surrounded by straight lines D'D, DJ, JK, KB", and B"D' that connect the following 5 points:
   point D' (58.4, 0.1667a+17.95, -1.1667a+23.65),
   point D (57.0, 0.0, -a+43.0),
   point J (-5.5a+21.45, 0.0, 4.5a+78.55),
   point K (0.0, -9.0a+35.1, 8.0a+64.9), and
   point B" (0.0, 0.0018a²+0.2025a+4.6993, -0.018a²-1.2025a+95.301), or
on the straight lines D'D, DJ, JK, and B"D' (excluding the points K and B"), and
   the coordinates (x,y,z) are, when 3.9 < a ≤ 10.0, within the range of a figure surrounded by straight lines D'D, DO, OB", and B"D' that connect the following 4 points:
   point D' (-0.0047a²+0.0815a+58.153, 0.0004a²+0.2245a+17.719, 0.0043a²-1.306a+24.128),
   point D (57.0, 0.0, -a+43.0),
   point 0 (0.0, 0.0, -a+100), and
   point B" (0.0, 0.0018a²+0.2025a+4.6993, -0.018a²-1.2025a+95.301), or
on the straight lines D'D, DO, and B"D' (excluding the points O and B").

In one embodiment, the present invention relates to a composition according to an above embodiment, comprising a refrigerant,
wherein the refrigerant comprises a component X, R32, HFC-152a, and CO₂,
the component X consists only of HFO-1132(E) or consists only of HFO-1132(E) and HFO-1123, and
when the mass% of the component X, R32, HFC-152a, and CO₂ in the refrigerant based on their sum are respectively represented by x, y, z, and a (wherein 0 < a ≤ 10.0), in a ternary composition diagram in which the sum of the component X, R32, and HFC-152a is (100-a) mass%, coordinates (x,y,z) are within the range of a figure surrounded by straight lines D'D, DL, LM, and MD' that connect the following 4 points:
   point D' (0.0178a²-0.0285a+58.3, -0.0455a²+0.4227a+14.3, 0.0411a²-1.6206a+42.7) when 0 < a ≤ 3.3,
   point D' (58.4, 0.1667a+17.95, -1.1667a+23.65) when 3.3 < a ≤ 3,9, or
   point D' (-0.0047a²+0.0815a+58.153, 0.0004a²+0.2245a+17.719, 0.0043a²-1.306a+24.128) when 3.9 < a ≤ 7.7, and
   when 0 < a ≤ 7.7,
   point D (57.0, 0.0, -a+43.0)
   point L (-2.5455a+25.876, 0.0, 1.5455a+74.124), and
   point M (0.0027a²-2.2157a+16.9, 0.0025a²-0.2916a+8.5, - 0.0052a²+1.5073a+74.6), or

on the straight lines D'D, DL, LM, and MD', and
   when 7.7 < a ≤ 10.0,
   the coordinates (x,y,z) are within the range of a figure surrounded by straight lines D'D, DL, LM, and MD' that connect the following 4 points:
      point D' (-0.0047a²+0.0815a+58.153, 0.0004a²+0.2245a+17.719, 0.0043a²-1.306a+24.128),
      point D (38.0, 0.0, -a+62.0),
      point L (-2.4345a+25.038, 0.0, 1.4345a+74.962), and
      point M (0.0, -0.0198a²-2.1285a+23.961, 0.0198a²+1.1285a+76.039), or
on the straight lines D'D, DL, LM, and MD'.

In one aspect, the present invention relates to the use of a composition according to any of the above embodiments as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, or R1234ze.

In one aspect, the present invention relates to a refrigeration apparatus comprising:
a use side heat transfer cycle for circulating a use side refrigerant;
a heat source side heat transfer cycle for circulating a heat source side refrigerant; and
a cascade heat exchanger for performing heat exchange between the use side refrigerant and the heat source side refrigerant,
wherein the heat source side refrigerant is a composition according to any one of the above embodiments.

In one aspect, the present invention relates to a refrigeration method comprising a step of operating a refrigeration cycle using a composition according to any one of the above embodiments.

In one aspect, the present invention relates to a refrigerating machine comprising the composition according to any one of the above embodiments as a working fluid.

In one aspect, the present invention relates to the use of HFO-1123, R32, R152a, and CO₂ for suppressing a disproportionation reaction of HFO-1132(E).

### Advantageous Effects of Invention

The refrigerant of the present disclosure has a low GWP.

### Brief Description of Drawings

Fig. 1 is a ternary diagram showing formulations of the refrigerant of the present disclosure.
Fig. 2 is a ternary diagram showing formulations of the refrigerant of the present disclosure.
Fig. 3 is a ternary diagram showing formulations of the refrigerant of the present disclosure.
Fig. 4 is a ternary diagram showing formulations of the refrigerant of the present disclosure.
Fig. 5 is a ternary diagram showing formulations of the refrigerant of the present disclosure.
Fig. 6 is a ternary diagram showing formulations of the refrigerant of the present disclosure.
Fig. 7 is a ternary diagram showing formulations of the refrigerant of the present disclosure.
Fig. 8 is a ternary diagram showing formulations of the refrigerant of the present disclosure.
Fig. 9 is a ternary diagram showing formulations of the refrigerant of the present disclosure.
Fig. 10 is a ternary diagram showing formulations of the refrigerant of the present disclosure.
Fig. 11 is a ternary diagram showing formulations of the refrigerant of the present disclosure.
Fig. 12 is a ternary diagram showing formulations of the refrigerant of the present disclosure.
Fig. 13 is a ternary diagram showing formulations of the refrigerant of the present disclosure.
Fig. 14 is a ternary diagram showing formulations of the refrigerant of the present disclosure.
Fig. 15 is a ternary diagram showing formulations of the refrigerant of the present disclosure.
Fig. 16 is a ternary diagram showing formulations of the refrigerant of the present disclosure.

### Description of Embodiments

In order to achieve the above object, the present inventors conducted extensive research and found that various mixed refrigerants described below have the characteristics described above.

The present disclosure has been completed as a result of further research based on this finding. The present disclosure includes the following embodiments.

### Definition of Terms

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC) .

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, "air-conditioning equipment for vehicles" is a type of refrigerating machine for use in vehicles, such as gasoline vehicles, hybrid vehicles, electric vehicles, and hydrogen vehicles. The air-conditioning equipment for vehicles refers to a refrigerating machine that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

In the present specification, the unit of pressure is an absolute pressure unless otherwise specified.

### 1. Refrigerant

The refrigerant of the present disclosure comprises a component X, HFC-152a, and CO2, and the component X consists only of trans-1,2-difluoroethylene (HFO-1132(E) or consists only of trans-1,2-difluoroethylene (HFO-1132(E) and trifluoroethylene (HFO-1123). The refrigerant of the present disclosure may further comprise difluoromethane (R32).

The refrigerant of the present disclosure is a low-GWP mixed refrigerant.

In the refrigerant of the present disclosure, when the mass% of the component X, R32, HFC-152a, and CO₂ based on their sum are respectively represented by x, y, z, and a (wherein 0 < a ≤ 10.0), if coordinates (x,y,z) satisfy the following requirements in a ternary composition diagram in which the sum of the component X, R32, and HFC-152a is (100-a) mass%, a disproportionation reaction does not occur at 5 MPa and 150°C, and GWP is 400 or less.

### <Requirements>

The coordinates (x,y,z) are, when 0 < a ≤ 4.75, within the range of a figure surrounded by straight lines CD, DO, OB, BA, and AC that connect the following 5 points:
point C (60.0, -a+40.0, 0.0),
point D (57.0, 0.0, -a+43.0),
point 0 (0.0, 0.0, -a+100),
point B (0.0, -0.0257a²+0.3536a+50.00, 0.0257a²-1.3536a+50.00), and
point A (-a+40.8, 59.2, 0.0), or

on the straight lines CD, DO, and BA (excluding the points C, O, B, and A), and
   the coordinates (x,y,z) are, when 4.75 < a ≤ 10.0, within the range of a figure surrounded by straight lines CD, DO, OB, BA, and AC that connect the following 5 points:
   point C (60.0, -a+40.0, 0.0),
   point D (57.0, 0.0, -a+43.0),
   point 0 (0.0, 0.0, -a+100),
   point B (0.0, -0.0137a²+0.4304a+49.364, 0.0137a²-1.4304a+50.636), and
   point A (-a+40.8, 59.2, 0.0), or
on the straight lines CD, DO, and BA (excluding the points C, O, B, and A).

In the refrigerant of the present disclosure, when the coordinates (x,y,z) satisfy the following requirements, a disproportionation reaction does not occur at 5 MPa and 150°C, GWP is 400 or less, and a refrigerating capacity (Cap) ratio relative to R410A is 70% or more.

### <Requirements>

The coordinates (x,y,z) are, when 0 < a ≤ 4.75, within the range of a figure surrounded by straight lines CD, DE, EE', E'F, FB, BA and AC that connect the following 7 points:
point C (60.0, -a+40.0, 0.0)
point D (57.0, 0.0, -a+43.0),
point E (-0.0046a²-3.3676a+50.70, 0.0, 0.0046a²+2.3676a+49.30),
point E' (-0.0019a²-2.5595a+12.2, -0.0013a²-0.373a+34.7, 0.0032a²+1.9325a+53.1),
point F (0.0, -0.0102a²-3.0461a+47.6, 0.0102a²+2.0461a+52.4),
point B (0.0, -0.0257a²+0.3536a+50.00, 0.0257a²-1.3536a+50.00), and
point A (-a+40.8, 59.2, 0.0), or

on the straight lines CD, DE, EE', E'F, and BA (excluding the points C, F, B, and A), and
   the coordinates (x,y,z) are, when 4.75 < a ≤ 10.0, within the range of a figure surrounded by straight lines CD, DE, EE', EF, FB, BA and AC that connect the following 6 points:
   point C (60.0, -a+40.0, 0.0)
   point D (57.0, 0.0, -a+43.0),
   point E (0.0018a²-3.5313a+51.333, 0.0, - 0.0018a²+2.5313a+48.667),
   point F (0.0, -0.0188a²-2.9037a+47.117, 0.0188a²+1.9037a+52.883),
   point B (0.0, -0.0137a²+0.4304a+49.364, 0.0137a²-1.4304a+50.636), and
   point A (-a+40.8, 59.2, 0.0), or
on the straight lines CD, DE, EF, FB, and BA (excluding the points C, F, B, and A).

In the refrigerant of the present disclosure, when the coordinates (x,y,z) satisfy the following requirements, a disproportionation reaction does not occur at 5 MPa and 150°C, GWP is 300 or less, and a refrigerating capacity (Cap) ratio relative to R410A is 70% or more.

### <Requirements>

The coordinates (x,y,z) are, when 0 < a ≤ 4.75, within the range of a figure surrounded by straight lines CD, DE, EE', and E'A' that connect the following 5 points:
point C (60.0, -a+40.0, 0.0)
point D (57.0, 0.0, -a+43.0),
point E (-0.0046a²-3.3676a+50.70, 0.0, 0.0046a²+2.3676a+49.30),
point E' (-0.0019a²-2.5595a+12.2, -0.0013a²-0.373a+34.7, 0.0032a²+1.9325a+53.1), and
point A' (-a+55.6, 44.4, 0.0), or

on the straight lines CD, DE, EE', and E'A', and
   the coordinates (x,y,z) are, when 4.75 < a ≤ 10.0, within the range of a figure surrounded by straight lines CD, DE, EF, FB', and B'A' that connect the following 6 points:
   point C (60.0, -a+40.0, 0.0)
   point D (57.0, 0.0, -a+43.0),
   point E (0.0018a²-3.5313a+51.333, 0.0, - 0.0018a²+2.5313a+48.667),
   point F (0.0, -0.0188a²-2.9037a+47.117, 0.0188a²+1.9037a+52.883),
   point B' (0.0, -0.0137a²+0.4304a+31.164, 0.0137a²-1.4304a+68.836), and
   point A' (-a+55.6, 44.4, 0.0), or
on the straight lines CD, DE, EF, and FA' (excluding the points C, F, and A').

In the refrigerant of the present disclosure, when the coordinates (x,y,z) satisfy the following requirements, a disproportionation reaction does not occur at 5 MPa and 150°C, GWP is 150 or less, and a boiling point is -40°C or less.

### <Requirements>

The coordinates (x,y,z) are, when 0 < a ≤ 3.3, within the range of a figure surrounded by straight lines D'D, DJ, JK, and KD' that connect the following 4 points:
point D' (0.0178a²-0.0285a+58.3, -0.0455a²+0.4227a+14.3, 0.0411a²-1.6206a+42.7),
point D (57.0, 0.0, -a+43.0),
point J (0.3041a²-8.5491a+28.2, 0.0, - 0.3041a²+7.5491a+71.8), and
point K (0.254a²-6.6564a+19.2, 0.0568a²-1.2784a+9.0, - 0.3108a²+6.9348a+71.8), or

on the straight lines D'D, DJ, JK, and KD', and
   the coordinates (x,y,z) are, when 3.3 < a ≤ 3.9, within the range of a figure surrounded by straight lines D'D, DJ, JK, KB", and B"D' that connect the following 5 points:
   point D' (58.4, 0.1667a+17.95, -1.1667a+23.65),
   point D (57.0, 0.0, -a+43.0),
   point J (-5.5a+21.45, 0.0, 4.5a+78.55),
   point K (0.0, -9.0a+35.1, 8.0a+64.9), and
   point B" (0.0, 0.0018a²+0.2025a+4.6993, -0.018a²-1.2025a+95.301), or
on the straight lines D'D, DJ, JK, and B"D' (excluding the points K and B"), and
   the coordinates (x,y,z) are, when 3.9 < a ≤ 10.0, within the range of a figure surrounded by straight lines D'D, DO, OB", and B"D' that connect the following 4 points:
   point D' (-0.0047a²+0.0815a+58.153, 0.0004a²+0.2245a+17.719, 0.0043a²-1.306a+24.128),
   point D (57.0, 0.0, -a+43.0),
   point 0 (0.0, 0.0, -a+100), and
   point B" (0.0, 0.0018a²+0.2025a+4.6993, -0.018a²-1.2025a+95.301), or
on the straight lines D'D, DO, and B"D' (excluding the points O and B").

The refrigerant of the present disclosure may comprise the component X and HFC-152a. The refrigerant may further comprise R32.

In the above-described embodiment, when the mass% of the component X, R32, HFC-152a, and CO₂ in the refrigerant of the present disclosure based on their sum are respectively represented by x, y, z, and a (wherein 0 < a ≤ 10.0), if the coordinates (x,y,z) satisfy the following requirements in a ternary composition diagram in which the sum of the component X, R32, and HFC-152a is (100-a) mass%, a disproportionation reaction does not occur at 5 MPa and 150°C, GWP is 150 or less, and a refrigerating capacity (Cap) ratio relative to R404A is 70% or more.

### <Requirements>

The coordinates (x,y,z) are within the range of a figure surrounded by straight lines D'D, DL, LM, and MD' that connect the following 4 points:
point D' (0.0178a²-0.0285a+58.3, -0.0455a²+0.4227a+14.3, 0.0411a²-1.6206a+42.7) when 0 < a ≤ 3.3,
point D' (58.4, 0.1667a+17.95, -1.1667a+23.65) when 3.3 < a ≤ 3,9, or
point D' (-0.0047a²+0.0815a+58.153, 0.0004a²+0.2245a+17.719, 0.0043a²-1.306a+24.128) when 3.9 < a ≤ 7.7, and
when 0 < a ≤ 7.7,
point D (57.0, 0.0, -a+43.0)
point L (-2.5455a+25.876, 0.0, 1.5455a+74.124), and
point M (0.0027a²-2.2157a+16.9, 0.0025a²-0.2916a+8.5, - 0.0052a²+1.5073a+74.6), or

on the straight lines D'D, DL, LM, and MD', and
   when 7.7 < a ≤ 10.0,
   the coordinates (x,y,z) are within the range of a figure surrounded by straight lines D'D, DL, LM, and MD' that connect the following 4 points:
      point D' (-0.0047a²+0.0815a+58.153, 0.0004a²+0.2245a+17.719, 0.0043a²-1.306a+24.128),
      point D (38.0, 0.0, -a+62.0),
      point L (-2.4345a+25.038, 0.0, 1.4345a+74.962), and
      point M (0.0, -0.0198a²-2.1285a+23.961, 0.0198a²+1.1285a+76.039), or
on the straight lines D'D, DL, LM, and MD'.

The refrigerant of the present disclosure may comprise HFO-1132(E) in an amount of 10 mass% or more, 20 mass% or more, 30 mass% or more, 40 mass% or more, or 50 mass% or more based on the entire refrigerant.

The refrigerant of the present disclosure may comprise R32 in an amount of 10 mass% or more, 20 mass% or more, 30 mass% or more, 40 mass% or more, or 50 mass% or more based on the entire refrigerant.

The refrigerant of the present disclosure may comprise R152a in an amount of 10 mass% or more, 20 mass% or more, 30 mass% or more, 40 mass% or more, 50 mass% or more, 60 mass% or more, 70 mass% or more, 80 mass% or more, or 90 mass% or more based on the entire refrigerant.

The refrigerant of the present disclosure may comprise the component X in an amount of 10 mass% or more, 20 mass% or more, 30 mass% or more, 40 mass% or more, or 50 mass% or more based on the entire refrigerant.

The refrigerant of the present disclosure may further comprise additional refrigerants in addition to component x, R32, HFC-152a, and co₂ as long as the above properties and effects are not impaired. In this respect, the refrigerant of the present disclosure in an embodiment preferably comprises component x, R32, HFC-152a, and co₂ in a total amount of 99.5 mass% or more, more preferably 99.75 mass% or more, still more preferably 99.9 mass% or more, further preferably 99.999 mass%, and most preferably 99.9999 mass% or more, based on the entire refrigerant. The refrigerant of the present disclosure may substantially consist only of component x, R32, HFC-152a, and co₂, and in this case, the refrigerant of the present disclosure may also consist only of component x, R32, HFC-152a, and co₂, an unavoidable impurity. The refrigerant of the present disclosure may consist only of component x, R32, HFC-152a, and co₂.

Additional refrigerants are not particularly limited and can be widely selected. The mixed refrigerant may contain one additional refrigerant, or two or more additional refrigerants.

Examples of the additional refrigerant include methylamine, acetylene, HFO-1141, HFO-1123, HFC-143a, HFC-134a, Z-HFO-1132, HFO-1243zf, HFC-245cb, HCFC-1122, HCFC-124, CFC-1113, and 3,3,3-trifluoropropyne.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

### 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

The composition of the present disclosure also includes a composition comprising a refrigerant, the refrigerant comprising component x, R32, R1234yf, and 0.1% or less of water.

### 2.2. Tracer

A tracer is added to the refrigerant composition according to the present disclosure at a detectable concentration so that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃Cl)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The refrigerant composition of the present disclosure may comprise 10 parts per million by weight (ppm) or more of tracers in total, based on the entire refrigerant composition. The refrigerant composition of the present disclosure may also comprise 1000 ppm or less of tracers in total, based on the entire refrigerant composition. The refrigerant composition of the present disclosure may preferably comprise 30 ppm or more and more preferably 50 ppm or more of tracers in total, based on the entire refrigerant composition. The refrigerant composition of the present disclosure may preferably comprise 500 ppm or less and 300 ppm or less of tracer in total, based on the entire refrigerant composition.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

### 3. Refrigeration-Oil-Containing Working Fluid

The refrigeration-oil-containing working fluid according to the present disclosure comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally comprises 10 mass% or more of refrigeration oil. The refrigeration-oil-containing working fluid generally comprises 50 mass% or less of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. A refrigeration oil with a kinematic viscosity of 400 cSt or less at 40°C is preferable from the standpoint of lubrication.

The refrigeration-oil-containing working fluid according to the present disclosure may further optionally contain at least one additive. Examples of additives include compatibilizing agents described below.

### 3.2. Compatibilizing Agent

The refrigeration-oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

The refrigerant, the refrigerant composition, and the refrigeration-oil-containing working fluid of the present disclosure can be used as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, or R1234ze.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

### 5. Method for suppressing disproportionation reaction

The method for suppressing the disproportionation reaction is a method for suppressing a disproportionation reaction of HFO-1132(E), comprising the step of operating a refrigeration cycle using the refrigerant of the present disclosure.

In the method for suppressing the disproportionation reaction of the present disclosure, particularly, it is possible to obtain an effect that the disproportionation reaction of HFO-1132 (E) does not occur even when the refrigerant pressure is 5.0 MPa and the refrigerant temperature is 150°C.

According to the method for suppressing a disproportionation reaction of the present disclosure, it is possible to operate a refrigeration cycle while suppressing a disproportionation reaction even in a refrigerating machine that is not specifically provided with a means for suppressing the disproportionation reaction.

### 7. Use for suppressing disproportionation reaction

The use of the present disclosure is the use of HFO-1123, R32, R152a, and CO₂ for suppressing a disproportionation reaction of HFO-1132(E), wherein the suppression of the disproportionation reaction is carried out by mixing HFO-1123, R32, R152a, CO₂, and HFO-1132(E) at a mixing ratio of the refrigerant of the present disclosure.

In the use for suppressing the disproportionation reaction of the present disclosure, particularly, it is possible to obtain an effect that the disproportionation reaction of HFO-1132 (E) does not occur even when the refrigerant pressure is 5.0 MPa and the refrigerant temperature is 150°C.

### 8. Refrigeration Apparatus

The refrigeration apparatus of the present disclosure is a refrigeration apparatus comprising:
a use side heat transfer cycle for circulating a use side refrigerant;
a heat source side heat transfer cycle for circulating a heat source side refrigerant; and
a cascade heat exchanger for performing heat exchange between the use side refrigerant and the heat source side refrigerant,
wherein the heat source side refrigerant is the composition described above in 1.

### Examples

The present disclosure is described in more detail below with reference to Examples. However, the present disclosure is not limited to the Examples.

Mixed refrigerants were prepared by mixing HFO-1132(E), R32, R152a, and co₂ at mass% based on their sum shown in Table 1.

Each of these mixed refrigerants was examined for disproportionation reactions under the following test methods and conditions.

### Test Method

A refrigerant composition to be tested was transferred into a test container and heated to 150°C, and then a voltage was applied to a Pt wire in the container to fuse the wire, thereby applying energy of 30 J to the refrigerant composition. The occurrence of the disproportionation reaction was determined by a rapid increase in pressure and temperature in the apparatus.

### Test Conditions

Test container: 38 cc, made of stainless steel (SUS),
Test temperature: 150°C
Pressure: 5 MPa
Evaluation Criteria
"Non-explosion": the temperature or pressure after the fusion of the Pt wire is less than 2 times, and no rapid disproportionation reaction occurs.
"Explosion": the temperature or pressure after the fusion of the Pt wire reaches twice or more and a rapid disproportionation reaction occurs

**[Table 1]**

| Item | unit | Experiment series 0-1 | | | Experiment series 0-2 | | | | | Experiment series 0-3 | | |
|---|---|---|---|---|---|---|---|---|---|---|---|---|
| | | Sam. 0-1 | Sam. 0-2 | Sam. 0-3 | Sam. 0-4 | Sam. 0-5 | Sam. 0-6 | Sam. 0-7 | Sam. 0-8 | Sam. 0-9 | Sam. 0-10 | Sam. 0-11 |
| HFO-1132 (E) | mass% | 62.0 | 60.0 | 58.0 | 60.5 | 60.5 | 58.5 | 56.5 | 56.5 | 59.0 | 57.0 | 55.0 |
| R32 | mass% | 38.0 | 40.0 | 42.0 | 20.0 | 18.0 | 20.0 | 20.0 | 22.0 | 0.0 | 0.0 | 0.0 |
| R152a | mass% | 0.0 | 0.0 | 0.0 | 19.5 | 21.5 | 21.5 | 23.5 | 21.5 | 41.0 | 43.0 | 45.0 |
| CO2 | mass% | 0.0 | 0.0 | 0.0 | 0.0 | 0.0 | 0.0 | 0.0 | 0.0 | 0.0 | 0.0 | 0.0 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

| Item | unit | Experiment series 1-1 | | | Experiment series 1-2 | | | | | Experiment series 1-3 | | |
|---|---|---|---|---|---|---|---|---|---|---|---|---|
| | | Sam. 1-1 | Sam. 1-2 | Sam. 1-3 | Sam. 1-4 | Sam. 1-5 | Sam. 1-6 | Sam. 1-7 | Sam. 1-8 | Sam. 1-9 | Sam. 1-10 | Sam. 1-11 |
| HFO-1132 (E) | mass% | 62.0 | 60.0 | 58.0 | 60.5 | 60.5 | 58.5 | 56.5 | 56.5 | 59.0 | 57.0 | 55.0 |
| R32 | mass% | 36.4 | 38.4 | 40.4 | 19.2 | 17.2 | 19.2 | 19.2 | 21.2 | 0.0 | 0.0 | 0.0 |
| R152a | mass% | 0.0 | 0.0 | 0.0 | 18.7 | 20.7 | 20.7 | 22.7 | 20.7 | 39.4 | 41.4 | 43.4 |
| CO2 | mass% | 1.6 | 1.6 | 1.6 | 1.6 | 1.6 | 1.6 | 1.6 | 1.6 | 1.6 | 1.6 | 1.6 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

| Item | unit | Experiment series 2-1 | | | Experiment series 2-2 | | | | | Experiment series 2-3 | | |
|---|---|---|---|---|---|---|---|---|---|---|---|---|
| | | Sam. 2-1 | Sam. 2-2 | Sam. 2-3 | Sam. 2-4 | Sam. 2-5 | Sam. 2-6 | Sam. 2-7 | Sam. 2-8 | Sam. 2-9 | Sam. 2-10 | Sam. 2-11 |
| HFO-1132 (E) | mass% | 62.0 | 60.0 | 58.00 | 60.50 | 60.50 | 58.50 | 56.50 | 56.50 | 59.00 | 57.0 | 55.0 |
| R32 | mass% | 34.7 | 36.7 | 38.70 | 18.35 | 16.35 | 18.35 | 18.35 | 20.35 | 0.00 | 0.0 | 0.0 |
| R152a | mass% | 0.0 | 0.0 | 0.00 | 17.85 | 19.85 | 19.85 | 21.85 | 19.85 | 37.70 | 39.7 | 41.7 |
| CO2 | mass% | 3.3 | 3.3 | 3.3 | 3.3 | 3.3 | 3.3 | 3.3 | 3.3 | 3.3 | 3.3 | 3.3 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

**[Table 2]**

| Item | unit | Experiment series 3-1 | | | Experiment series 3-2 | | | | | Experiment series 3-3 | | |
|---|---|---|---|---|---|---|---|---|---|---|---|---|
| | | Sam. 3-1 | Sam. 3-2 | Sam. 3-3 | Sam. 3-4 | Sam. 3-5 | Sam. 3-6 | Sam. 3-7 | Sam. 3-8 | Sam. 3-9 | Sam. 3-10 | Sam. 3-11 |
| HFO-1132 (E) | mass% | 62.0 | 60.0 | 58.0 | 60.50 | 60.50 | 58.50 | 56.50 | 56.50 | 59.00 | 57.0 | 55.0 |
| R32 | mass% | 34.1 | 36.1 | 38.10 | 18.05 | 16.05 | 18.05 | 18.05 | 20.05 | 0.00 | 0.0 | 0.0 |
| R152a | mass% | 0.0 | 0.0 | 0.00 | 17.55 | 19.55 | 19.55 | 21.55 | 19.55 | 37.10 | 39.1 | 41.1 |
| CO2 | mass% | 3.9 | 3.9 | 3.9 | 3.9 | 3.9 | 3.9 | 3.9 | 3.9 | 3.9 | 3.9 | 3.9 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

| Item | unit | Experiment series 4-1 | | | Experiment series 4-2 | | | | | Experiment series 4-3 | | |
|---|---|---|---|---|---|---|---|---|---|---|---|---|
| | | Sam. 4-1 | Sam. 4-2 | Sam. 4-3 | Sam. 4-4 | Sam. 4-5 | Sam. 4-6 | Sam. 4-7 | Sam. 4-8 | Sam. 4-9 | Sam. 4-10 | Sam. 4-11 |
| HFO-1132 (E) | mass% | 62.0 | 60.0 | 58.0 | 60.50 | 60.50 | 58.50 | 56.50 | 56.50 | 59.00 | 57.0 | 55.0 |
| R32 | mass% | 33.3 | 35.3 | 37.25 | 17.63 | 15.63 | 17.63 | 17.63 | 19.63 | 0.00 | 0.0 | 0.0 |
| R152a | mass% | 0.0 | 0.0 | 0.00 | 17.13 | 19.13 | 19.13 | 21.13 | 19.13 | 36.25 | 38.3 | 40.3 |
| CO2 | mass% | 4.75 | 4.75 | 4.75 | 4.75 | 4.75 | 4.75 | 4.75 | 4.75 | 4.75 | 4.75 | 4.75 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

| Item | unit | Experiment series 5-1 | | | Experiment series 5-2 | | | | | Experiment series 5-3 | | |
|---|---|---|---|---|---|---|---|---|---|---|---|---|
| | | Sam. 5-1 | Sam. 5-2 | Sam. 5-3 | Sam. 54 | Sam. 5-5 | Sam. 5-6 | Sam. 5-7 | Sam. 5-8 | Sam. 5-9 | Sam. 5-10 | Sam. 5-11 |
| HFO-1132 (E) | mass% | 62.0 | 60.0 | 58.00 | 60.50 | 60.50 | 58.50 | 56.50 | 56.50 | 59.00 | 57.0 | 55.0 |
| R32 | mass% | 30.6 | 32.6 | 34.60 | 16.30 | 14.30 | 16.30 | 16.30 | 18.30 | 0.00 | 0.0 | 0.0 |
| R152a | mass% | 0.0 | 0.0 | 0.00 | 15.80 | 17.80 | 17.80 | 19.80 | 17.80 | 33.60 | 35.6 | 37.6 |
| CO2 | mass% | 7.4 | 7.4 | 7.4 | 7.4 | 7.4 | 7.4 | 7.4 | 7.4 | 7.4 | 7.4 | 7.4 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

**[Table 3]**

| Item | unit | Experiment series 6-1 | | | Experiment series 6-2 | | | | | Experiment series 6-3 | | |
|---|---|---|---|---|---|---|---|---|---|---|---|---|
| | | Sam. 6-1 | Sam. 6-2 | Sam. 6-3 | Sam. 64 | Sam. 6-5 | Sam. 6-6 | Sam. 6-7 | Sam. 68 | Sam. 6-9 | Sam. 6-10 | Sam. 6-11 |
| HFO-1132 (E) | mass% | 62.0 | 60.0 | 58.00 | 60.50 | 60.50 | 58.50 | 56.50 | 56.50 | 59.00 | 57.0 | 55.0 |
| R32 | mass% | 30.3 | 32.3 | 34.30 | 16.15 | 14.15 | 16.15 | 16.15 | 18.15 | 0.00 | 0.0 | 0.0 |
| R152a | mass% | 0.0 | 0.0 | 0.00 | 15.65 | 17.65 | 17.65 | 19.65 | 17.65 | 33.30 | 35.3 | 37.3 |
| CO2 | mass% | 7.7 | 7.7 | 7.7 | 7.7 | 7.7 | 7.7 | 7.7 | 77 | 7.7 | 7.7 | 7.7 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

| Item | unit | Experiment series 7-1 | | | Experiment series 7-2 | | | | | Experiment series 7-3 | | |
|---|---|---|---|---|---|---|---|---|---|---|---|---|
| | | Sam. 7-1 | Sam. 7-2 | Sam. 7-3 | Sam. 7-4 | Sam. 7-5 | Sam. 7-6 | Sam. 7-7 | Sam. 7-8 | Sam. 7-9 | Sam. 7-10 | Sam. 7-11 |
| HFO-1132 (E) | mass% | 62.0 | 60.0 | 58.00 | 60.50 | 60.50 | 58.50 | 56.50 | 56.50 | 59.00 | 57.0 | 55.0 |
| R32 | mass% | 29.1 | 31.1 | 33.10 | 15.55 | 13.55 | 15.55 | 15.55 | 17.55 | 0.00 | 0.0 | 0.0 |
| R152a | mass% | 0.0 | 0.0 | 0.00 | 15.05 | 17.05 | 17.05 | 19.05 | 17.05 | 32.10 | 34.1 | 36.1 |
| CO2 | mass% | 8.9 | 8.9 | 8.9 | 8.9 | 8.9 | 8.9 | 8.9 | 8.9 | 8.9 | 8.9 | 8.9 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

| Item | unit | Experiment series 8-1 | | | Experiment series 8-2 | | | | | Experiment series 8-3 | | |
|---|---|---|---|---|---|---|---|---|---|---|---|---|
| | | Sam. 8-1 | Sam. 8-2 | Sam. 8-3 | Sam. 8-4 | Sam. 8-5 | Sam. 8-6 | Sam. 8-7 | Sam. 8-8 | Sam. 8-9 | Sam. 8-10 | Sam. 8-11 |
| HFO-1132 (E) | mass% | 62.0 | 60.0 | 58.00 | 60.50 | 60.50 | 58.50 | 56.50 | 56.50 | 59.00 | 57.0 | 55.0 |
| R32 | mass% | 28.0 | 30.0 | 32.00 | 15.00 | 13.00 | 15.00 | 15.00 | 17.00 | 0.00 | 0.0 | 0.0 |
| R152a | mass% | 0.0 | 0.0 | 0.00 | 14.50 | 16.50 | 16.50 | 18.50 | 16.50 | 31.00 | 33.0 | 35.0 |
| CO2 | mass% | 10.0 | 10.0 | 10.0 | 10.0 | 10.0 | 10.0 | 10.0 | 10.0 | 10.0 | 10.0 | 10.0 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

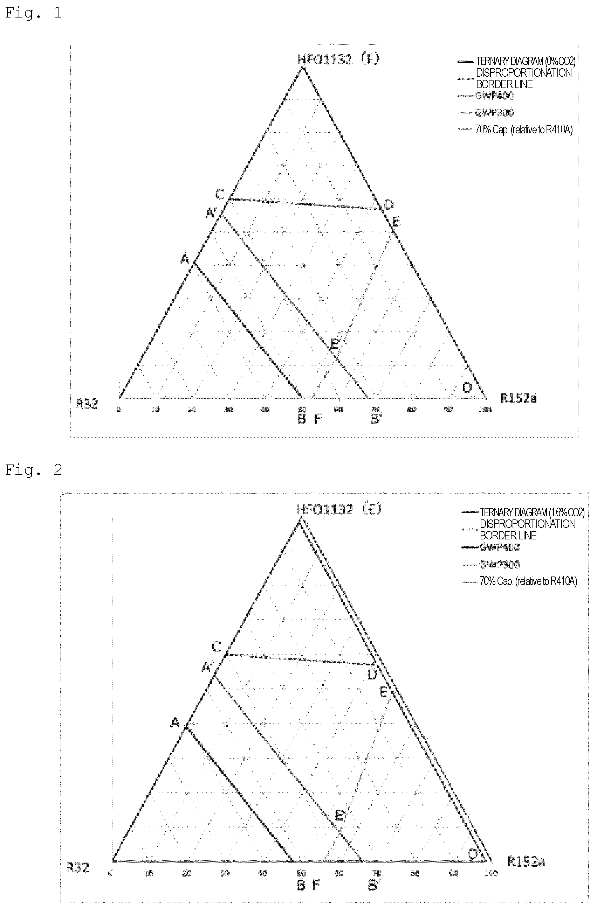

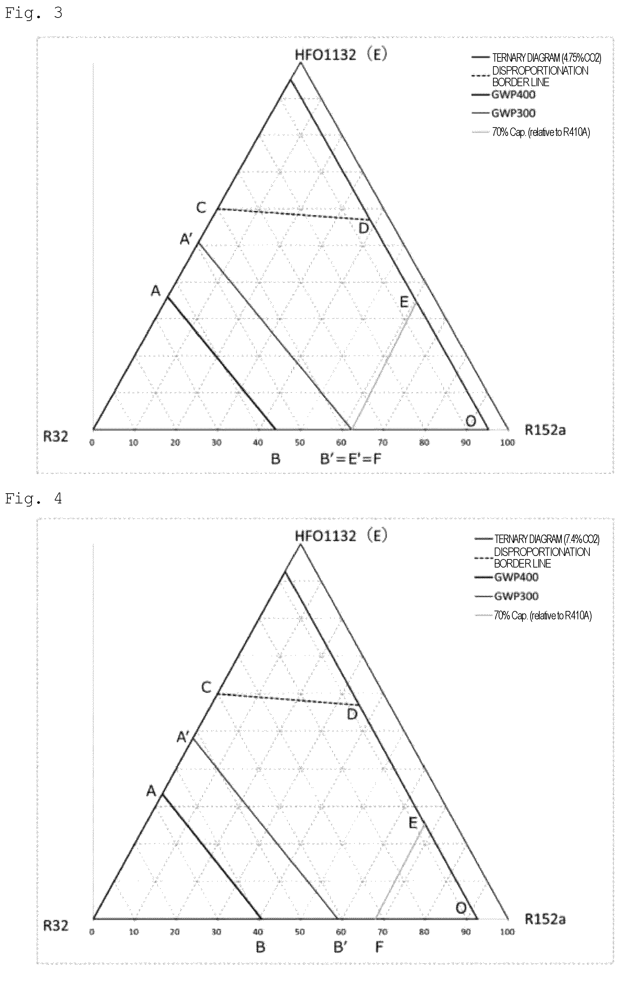

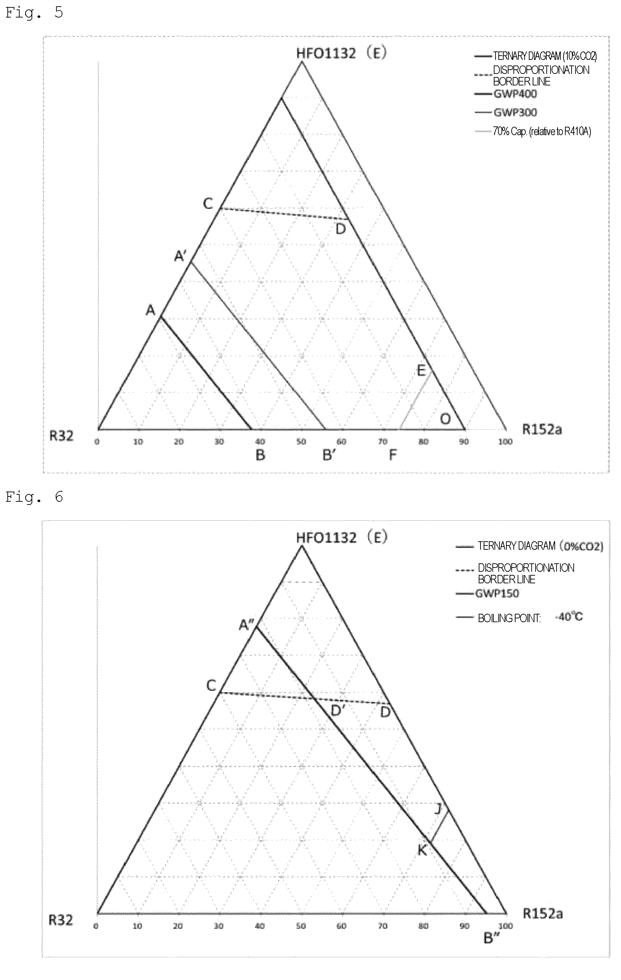

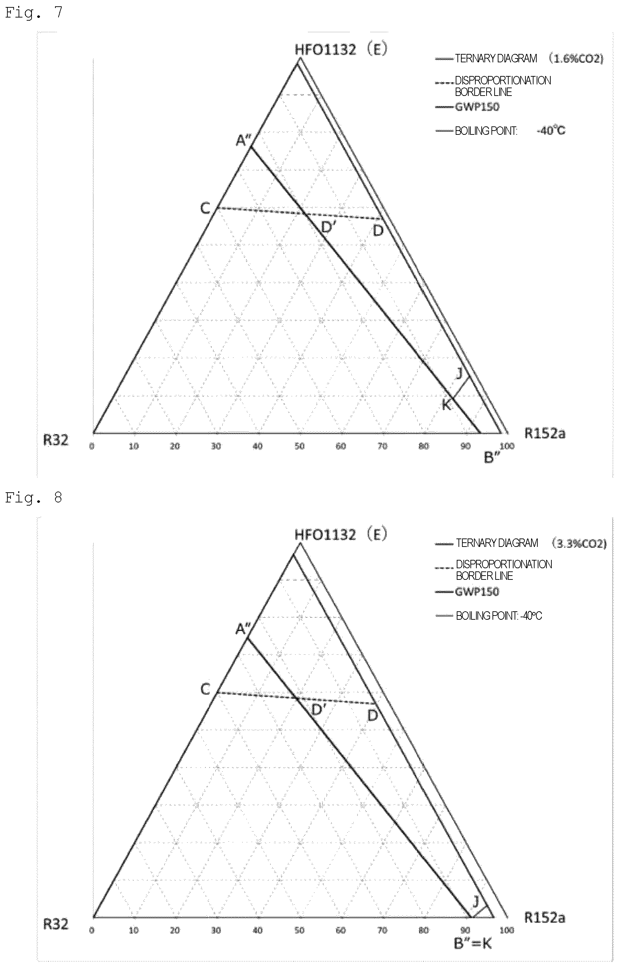

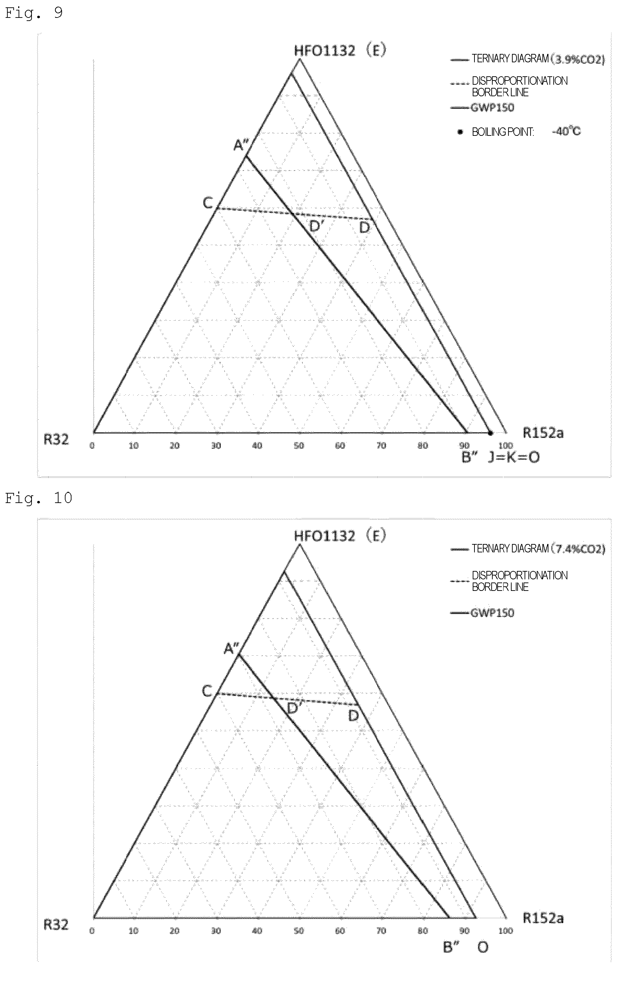

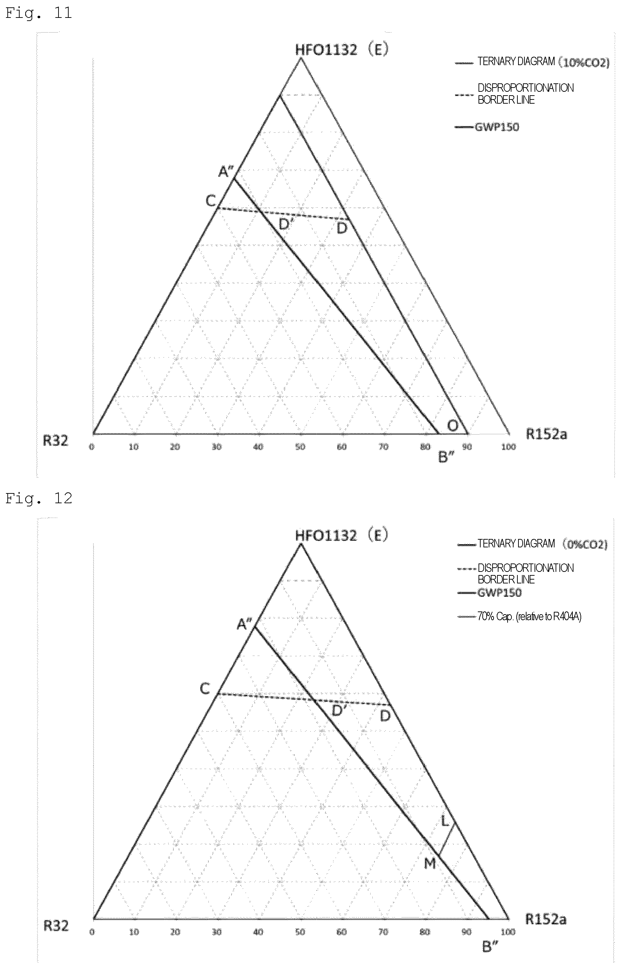

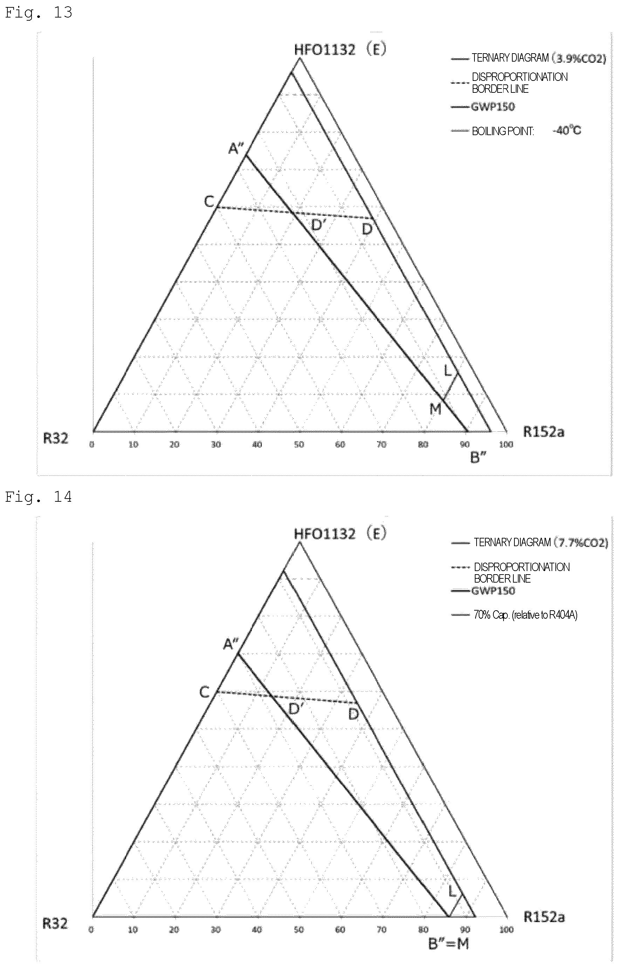

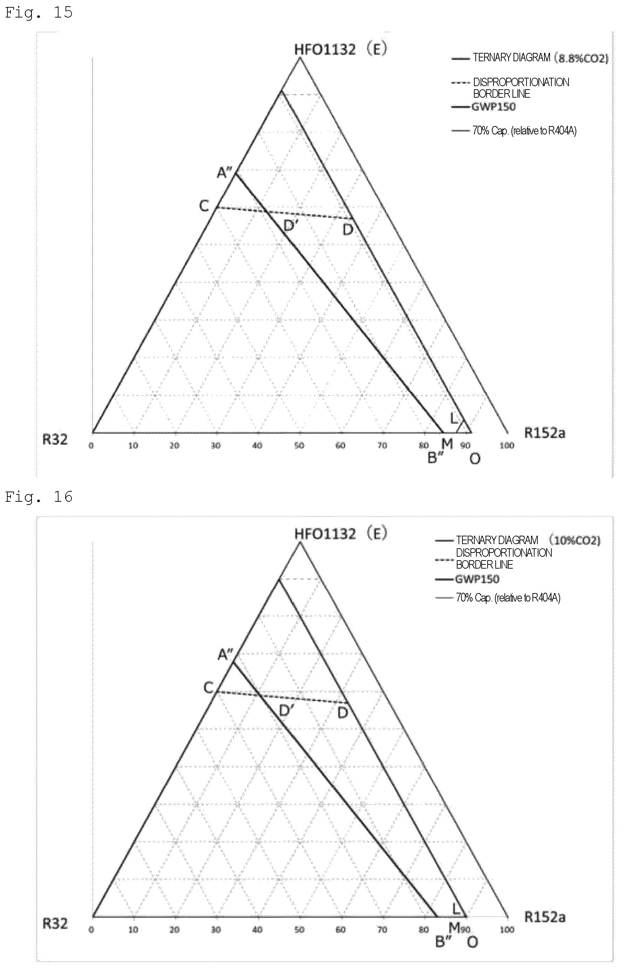

The results in Tables 1 to 3 indicate that the refrigerant of the present disclosure does not undergo disproportionation in the region shown in the ternary diagram of Figures 1 to 19.

The GWP of HFO-1132(E) was set to 1, and the GWP of mixed refrigerants was evaluated with the GWP of R32 and HFO-1234yf based on the values stated in the Intergovernmental Panel on Climate Change (IPCC), fourth report. The COP, refrigerating capacity, discharge temperature, and boiling point of mixed refrigerants were determined by performing theoretical refrigeration cycle calculations for the mixed refrigerants using the National Institute of Science and Technology (NIST) and Reference Fluid Thermodynamic and Transport Properties Database (Refprop 10.0) under the following conditions. The physical property data of HFO-1132 (E) were determined from measured values.

### <Performance Comparison with R410A>

evaporation temperature: 5°C
condensation temperature: 45°C
superheating temperature: 5 K
subcooling temperature: 5 K
compressor efficiency: 70%

### <Performance Comparison with R1234yf>

evaporation temperature: -30°C
condensation temperature: 30°C
superheating temperature: 5 K
subcooling temperature: 5 K
compressor efficiency: 70%

### <Performance Comparison with R404A>

evaporation temperature: -40°C
condensation temperature: 40°C
superheating temperature: 20 K
subcooling temperature: 0 K
compressor efficiency: 70%

In the following tables, "COP ratio", and "Refrigerating capacity ratio" each indicate a proportion (%) relative to each specified refrigerant.
In the tables, "boiling point (°C)" indicates the temperature at which a liquid phase of the mixed refrigerant reaches atmospheric pressure (101.33 kPa). In the table, "power consumption (%) of driving force" indicate electric energy used for traveling an electric vehicle and is expressed as a ratio of power consumption when the refrigerant is HFO-1234yf. In the tables, "power consumption (%) for heating" indicates electric energy used by an electric vehicle to operate heating and is expressed as a ratio of power consumption when the refrigerant is HFO-1234yf.

In the following tables, "possible travel distance (with heating)" represents a relative proportion (%) of the distance that can be traveled by an electric vehicle equipped with a secondary battery with a certain electric capacity while having a heater turned on if possible travel distance (without heating) is set to 100% when the vehicle is driven without heating (power consumption for heating is 0).

For the heating method, an electric heater system was used for heating for the refrigerant having a boiling point of higher than -40°C, and a heat pump system was used for heating for the refrigerant having a boiling point of -40°C or lower.

The power consumption during heating was determined based on the following equation. The heating COP means "heating efficiency".$Power consumption during heating = heating capacity / heating COP$

Regarding heating efficiency, in the case of an electric heater, the heating COP = 1, and electrodes equivalent to driving force are consumed for heating. In other words, the power consumption for heating is E = E/(1+COP).

On the other hand, in the case of a heat pump, the heating COP was also determined by theoretical refrigeration cycle calculations for the mixed refrigerants using Refprop 10.0 (manufactured by NIST) under the following conditions.
Evaporation temperature: -30°C
Condensation temperature: 30°C
Superheating temperature: 5K
Subcooling temperature: 5K
Compressor efficiency: 70%

The possible travel distance was determined according to the following equation. 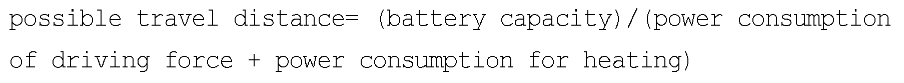 possible travel distance= (battery capacity)/(power consumption of driving force + power consumption for heating)

These values, together with the GWP for each mixed refrigerant, are shown in the following tables. The specific COP and specific refrigerating capacity are shown as a proportion relative to HFO-1234y.

The coefficient of performance (COP)was determined according to the following equation. 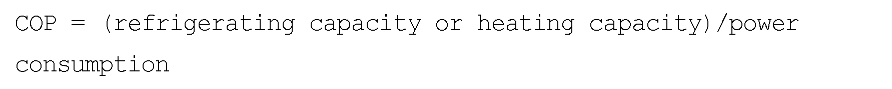 COP = (refrigerating capacity or heating capacity)/power consumption

**[Table 4]**

| Item | unit | Ref. Ex.1 | Com.Ex.0-1 | Com. Ex.0-2 | Com.Ex.0-3 | Com.Ex.04 | Com.Ex.0-5 | Com.Ex.0-6 | Com. Ex.0-7 | Com.Ex.0-8 | Com.Ex.0-9 | Com.Ex.0-10 |
|---|---|---|---|---|---|---|---|---|---|---|---|---|
| | | | A | B | A' | B' | C | D | O | E | E' | F |
| E-HFO-1132 | mass% | R410A | 40.8 | 0.0 | 55.6 | 0.0 | 60.0 | 57.0 | 0.0 | 50.7 | 12.2 | 0.0 |
| R32 | mass% | | 59.2 | 50.0 | 44.4 | 32.0 | 40.0 | 0.0 | 0.0 | 0.0 | 34.7 | 47.6 |
| R152a | mass% | | 0.0 | 50.0 | 0.0 | 68.0 | 0.0 | 43.0 | 100.0 | 49.3 | 53.1 | 52.4 |
| CO2 | mass% | | 0.0 | 0.0 | 0.0 | 0.0 | 0.0 | 0.0 | 0.0 | 0.0 | 0.0 | 0.0 |
| GWP | - | 2088 | 400 | 400 | 300 | 300 | 271 | 54 | 124 | 62 | 300 | 386 |
| COP ratio | %(relative to R410A) | 100 | 101 | 107 | 101 | 109 | 101 | 105 | 111 | 106 | 107 | 107 |
| Refrigerating capacity ratio | %(relative to R410A) | 100 | 111 | 72 | 110 | 60 | 109 | 74 | 42 | 70 | 70 | 70 |

| Item | unit | Ref. Ex.1 | Com.Ex.1-1 | Com.Ex. 1-2 | Com.Ex.1-3 | Com.Ex.1-4 | Com.Ex.1-5 | Ex.1-1 | Com.Ex.1-6 | Ex.1-2 | Ex.1-3 | Com.Ex. 1-7 |
|---|---|---|---|---|---|---|---|---|---|---|---|---|
| | | | A | B | A' | B' | C | D | O | E | E' | F |
| E-HFO-1132 | mass% | R410A | 39.2 | 0.0 | 54.0 | 0.0 | 60.0 | 57.0 | 0.0 | 45.3 | 8.1 | 0.0 |
| R32 | mass% | | 59.2 | 50.5 | 44.4 | 32.3 | 38.4 | 0.0 | 0.0 | 0.0 | 34.1 | 42.7 |
| R152a | mass% | | 0.0 | 47.9 | 0.0 | 66.1 | 0.0 | 41.4 | 98.4 | 53.1 | 56.2 | 55.7 |
| CO2 | mass% | | 1.6 | 1.6 | 1.6 | 1.6 | 1.6 | 1.6 | 1.6 | 1.6 | 1.6 | 1.6 |
| GWP | - | 2088 | 400 | 400 | 300 | 300 | 260 | 52 | 122 | 66 | 300 | 357 |
| COP ratio | %(relative to R410A) | 100 | 101 | 106 | 100 | 108 | 100 | 104 | 109 | 106 | 107 | 107 |
| Refrigerating capacity ratio | %(relative to R410A) | 100 | 114 | 75 | 112 | 64 | 112 | 76 | 45 | 70 | 70 | 70 |

**[Table 5]**

| Item | unit | Ref. Ex.1 | Com.Ex.4-1 | Com.Ex.4-2 | Com.Ex.4-3 | Com.Ex.4-4 | Com.Ex.4-5 | Ex.4-1 | Com.Ex.4-6 | Ex.4-2 |
|---|---|---|---|---|---|---|---|---|---|---|
| | | | A | B | A' | B'=E'=F | C | D | O | E |
| E-HFO-1132 | mass% | R410A | 36.05 | 0.00 | 50.85 | 0.00 | 60.00 | 57.00 | 0.00 | 34.60 |
| R32 | mass% | | 59.20 | 51.10 | 44.40 | 32.90 | 35.25 | 0.00 | 0.00 | 0.00 |
| R152a | mass% | | 0.00 | 44.15 | 0.00 | 62.35 | 0.00 | 38.25 | 95.25 | 60.65 |
| CO2 | mass% | | 4.75 | 4.75 | 4.75 | 4.75 | 4.75 | 4.75 | 4.75 | 4.75 |
| GWP | - | 2088 | 400 | 400 | 300 | 299 | 239 | 48 | 118 | 76 |
| COP ratio | %(relative to R410A) | 100 | 100 | 105 | 100 | 106 | 99 | 103 | 107 | 106 |
| Refrigerating capacity ratio | %(relative to R410A) | 100 | 119 | 82 | 117 | 70 | 116 | 83 | 50 | 70 |

| Item | unit | Ref. Ex.1 | Com.Ex.5-1 | Com. Ex.5-2 | Com.Ex.5-3 | Com.Ex.5-4 | Com.Ex.5-5 | Ex.5-1 | Com.Ex.5-6 | Ex.5-2 | Com. Ex.5-7 |
|---|---|---|---|---|---|---|---|---|---|---|---|
| | | | A | B | A' | B' | C | D | O | E | F |
| E-HFO-1132 | mass% | R410A | 33.40 | 0.00 | 48.20 | 0.00 | 60.00 | 57.00 | 0.00 | 25.30 | 0.00 |
| R32 | mass% | | 59.20 | 51.80 | 44.40 | 33.60 | 32.60 | 0.00 | 0.00 | 0.00 | 24.60 |
| R152a | mass% | | 0.00 | 40.80 | 0.00 | 59.00 | 0.00 | 35.60 | 92.60 | 67.30 | 68.00 |
| CO2 | mass% | | 7.40 | 7.40 | 7.40 | 7.40 | 7.40 | 7.40 | 7.40 | 7.40 | 7.40 |
| GWP | - | 2088 | 400 | 400 | 300 | 300 | 221 | 45 | 115 | 84 | 250 |
| COP ratio | %(relative to R410A) | 100 | 99 | 104 | 99 | 105 | 99 | 102 | 106 | 106 | 106 |
| Refrigerating capacity ratio | %(relative to R410A) | 100 | 123 | 88 | 121 | 76 | 119 | 88 | 55 | 70 | 70 |

**[Table 6]**

| Item | unit | Ref. Ex.1 | Com.Ex.8-1 | Com. Ex.8-2 | Com.Ex.8-3 | Com.Ex.8-4 | Com.Ex.8-5 | Ex.8-1 | Com.Ex.8-6 | Ex.8-2 | Com. Ex.8-7 |
|---|---|---|---|---|---|---|---|---|---|---|---|
| | | | A | B | A' | B' | C | D | O | E | F |
| E-HFO-1132 | mass% | R410A | 30.80 | 0.00 | 45.60 | 0.00 | 60.00 | 57.00 | 0.00 | 16.20 | 0.00 |
| R32 | mass% | | 59.20 | 52.30 | 44.40 | 34.10 | 30.00 | 0.00 | 0.00 | 0.00 | 16.20 |
| R152a | mass% | | 0.00 | 37.70 | 0.00 | 55.90 | 0.00 | 33.00 | 90.00 | 73.80 | 73.80 |
| CO2 | mass% | | 10.00 | 10.00 | 10.00 | 10.00 | 10.00 | 10.00 | 10.00 | 10.00 | 10.00 |
| GWP | - | 2088 | 400 | 400 | 300 | 300 | 203 | 42 | 112 | 92 | 201 |
| COP ratio | %(relative to R410A) | 100 | 99 | 103 | 98 | 105 | 98 | 101 | 106 | 106 | 106 |
| Refrigerating capacity ratio | %(relative to R410A) | 100 | 127 | 94 | 125 | 81 | 123 | 93 | 60 | 70 | 70 |

**[Table 7]**

| Item | unit | Ref. Ex.1 | Sam.1-12 | Sam.1-13 | Sam.1-14 | Sam.1-15 | Sam.1-16 | Sam.1-17 | Sam.1-18 | Sam.1-19 | Sam.1-20 | Sam.1-21 |
|---|---|---|---|---|---|---|---|---|---|---|---|---|
| E-HFO-1132 | mass% | R410A | 10.0 | 10.0 | 10.0 | 10.0 | 20.0 | 20.0 | 20.0 | 20.0 | 30.0 | 15.0 |
| HFO-1123 | mass% | | 0.0 | 0.0 | 0.0 | 0.0 | 0.0 | 0.0 | 0.0 | 0.0 | 0.0 | 15.0 |
| R32 | mass% | | 10.0 | 30.0 | 50.0 | 60.0 | 10.0 | 30.0 | 50.0 | 60.0 | 10.0 | 10.0 |
| R152a | mass% | | 78.4 | 58.4 | 38.4 | 28.4 | 68.4 | 48.4 | 28.4 | 18.4 | 58.4 | 58.4 |
| CO2 | mass% | | 1.6 | 1.6 | 1.6 | 1.6 | 1.6 | 1.6 | 1.6 | 1.6 | 1.6 | 1.6 |
| GWP | - | 2088 | 165 | 275 | 385 | 440 | 153 | 263 | 373 | 428 | 140 | 140 |
| COP ratio | %(relative to R410A) | 100 | 108 | 107 | 105 | 104 | 108 | 106 | 104 | 103 | 107 | 106 |
| Refrigerating capacity ratio | %(relative to R410A) | 100 | 56 | 69 | 82 | 89 | 62 | 75 | 89 | 97 | 68 | 69 |

| Item | unit | Sam. 1-22 | Sam. 1-23 | Sam.1-24 | Sam.1-25 | Sam. 1-26 | Sam.1-27 | Sam.1-28 | Sam.1-29 | Sam.1-30 | Sam.1-31 | Sam.1-32 |
|---|---|---|---|---|---|---|---|---|---|---|---|---|
| E-HFO-1132 | mass% | 0.0 | 30.0 | 30.0 | 30.0 | 40.0 | 40.0 | 40.0 | 50.0 | 50.0 | 65.0 | 65.0 |
| HFO-1123 | mass% | 30.0 | 0.0 | 0.0 | 0.0 | 0.0 | 0.0 | 0.0 | 0.0 | 0.0 | 0.0 | 0.0 |
| R32 | mass% | 10.0 | 30.0 | 50.0 | 60.0 | 10.0 | 30.0 | 50.0 | 10.0 | 30.0 | 10.0 | 30.0 |
| R152a | mass% | 58.4 | 38.4 | 18.4 | 8.4 | 48.4 | 28.4 | 8.4 | 38.4 | 18.4 | 23.4 | 3.4 |
| CO2 | mass% | 1.6 | 1.6 | 1.6 | 1.6 | 1.6 | 1.6 | 1.6 | 1.6 | 1.6 | 1.6 | 1.6 |
| GWP | - | 140 | 250 | 361 | 416 | 128 | 238 | 348 | 116 | 226 | 97 | 207 |
| COP ratio | %(relative to R410A) | 106 | 105 | 103 | 102 | 105 | 103 | 101 | 104 | 102 | 102 | 100 |
| Refrigerating capacity ratio | %(relative to R410A) | 69 | 82 | 97 | 106 | 74 | 88 | 105 | 80 | 96 | 89 | 107 |
| Disproportionation reaction(5Mpa) | | - | - | - | - | - | - | - | Non-explosion | Non-explosion | Explosion | Explosion |

**[Table 8]**

| Item | unit | Ref. Ex.1 | Sam.4-12 | Sam.4-13 | Sam.4-14 | Sam.4-15 | Sam.4-16 | Sam.4-17 | Sam.4-18 | Sam.4-19 | Sam.4-20 | Sam.4-21 |
|---|---|---|---|---|---|---|---|---|---|---|---|---|
| E-HFO-1132 | mass% | R410A | 10.0 | 10.0 | 10.0 | 10.0 | 20.0 | 20.0 | 20.0 | 20.0 | 30.0 | 15.0 |
| HFO-1123 | mass% | | 0.0 | 0.0 | 0.0 | 0.0 | 0.0 | 0.0 | 0.0 | 0.0 | 0.0 | 15.0 |
| R32 | mass% | | 10.0 | 30.0 | 50.0 | 60.0 | 10.0 | 30.0 | 50.0 | 60.0 | 10.0 | 10.0 |
| R152a | mass% | | 75.25 | 55.25 | 35.25 | 25.25 | 65.25 | 45.25 | 25.25 | 15.25 | 55.25 | 55.25 |
| CO2 | mass% | | 4.75 | 4.75 | 4.75 | 4.75 | 4.75 | 4.75 | 4.75 | 4.75 | 4.75 | 4.75 |
| GWP | - | 2088 | 161 | 271 | 381 | 436 | 149 | 259 | 369 | 424 | 136 | 136 |
| COP ratio | %(relative to R410A) | 100 | 107 | 106 | 104 | 103 | 106 | 104 | 102 | 101 | 105 | 105 |
| Refrigerating capacity ratio | %(relative to R410A) | 100 | 62 | 75 | 88 | 96 | 68 | 81 | 96 | 104 | 74 | 75 |

| Item | unit | Sam.4-22 | Sam.4-23 | Sam.4-24 | Sam.4-25 | Sam.4-26 | Sam.4-27 | Sam.4-28 | Sam.4-29 | Sam.4-30 | Sam.4-31 | Sam.4-32 |
|---|---|---|---|---|---|---|---|---|---|---|---|---|
| E-HFO-1132 | mass% | 0.0 | 30.0 | 30.0 | 30.0 | 40.0 | 40.0 | 40.0 | 50.0 | 50.0 | 65.0 | 65.0 |
| HFO-1123 | mass% | 30.0 | 0.0 | 0.0 | 0.0 | 0.0 | 0.0 | 0.0 | 0.0 | 0.0 | 0.0 | 0.0 |
| R32 | mass% | 10.0 | 30.0 | 50.0 | 60.0 | 10.0 | 30.0 | 50.0 | 10.0 | 30.0 | 10.0 | 25.0 |
| R152a | mass% | 55.3 | 35.3 | 15.3 | 5.3 | 45.3 | 25.3 | 5.3 | 35.3 | 15.3 | 20.3 | 5.3 |
| CO2 | mass% | 4.8 | 4.8 | 4.8 | 4.8 | 4.8 | 4.8 | 4.8 | 4.8 | 4.8 | 4.8 | 4.8 |
| GWP | - | 136 | 247 | 357 | 412 | 124 | 234 | 344 | 112 | 222 | 93 | 176 |
| COP ratio | %(relative to R410A) | 105 | 103 | 101 | 101 | 104 | 102 | 100 | 103 | 101 | 101 | 100 |
| Refrigerating capacit_{y} ratio | %(relative to R410A) | 76 | 88 | 104 | 113 | 80 | 95 | 113 | 86 | 103 | 96 | 109 |
| Disproportionation reaction(5Mpa) | | - | - | - | - | - | - | - | Non-explosion | Non-explosion | Explosion | Explosion |

**[Table 9]**

| Item | unit | Ref. Ex.1 | Sam.5-12 | Sam.5-13 | Sam.5-14 | Sam.5-15 | Sam.5-16 | Sam.5-17 | Sam.5-18 | Sam.5-19 | Sam.5-20 | Sam.5-21 |
|---|---|---|---|---|---|---|---|---|---|---|---|---|
| E-HFO-1132 | mass% | R410A | 10.0 | 10.0 | 10.0 | 10.0 | 20.0 | 20.0 | 20.0 | 20.0 | 30.0 | 15.0 |
| HFO-1123 | mass% | | 0.0 | 0.0 | 0.0 | 0.0 | 0.0 | 0.0 | 0.0 | 0.0 | 0.0 | 15.0 |
| R32 | mass% | | 10.0 | 30.0 | 50.0 | 60.0 | 10.0 | 30.0 | 50.0 | 60.0 | 10.0 | 10.0 |
| R152a | mass% | | 72.6 | 52.6 | 32.6 | 22.6 | 62.6 | 42.6 | 22.6 | 12.6 | 52.6 | 52.6 |
| CO2 | mass% | | 7.4 | 7.4 | 7.4 | 7.4 | 7.4 | 7.4 | 7.4 | 7.4 | 7.4 | 7.4 |
| GWP | - | 2088 | 158 | 268 | 378 | 433 | 145 | 256 | 366 | 421 | 133 | 133 |
| COP ratio | %(relative to R410A) | 100 | 106 | 105 | 103 | 102 | 105 | 103 | 101 | 100 | 104 | 104 |
| Refrigerating capacity ratio | %(relative to R410A) | 100 | 67 | 80 | 94 | 102 | 73 | 87 | 102 | 111 | 79 | 81 |

| Item | unit | Sam.5-22 | Sam.5-23 | Sam.5-24 | Sam.5-25 | Sam.5-26 | Sam.5-27 | Sam.5-28 | Sam.5-29 | Sam.5-30 | Sam.5-31 | Sam.5-32 |
|---|---|---|---|---|---|---|---|---|---|---|---|---|
| E-HFO-1132 | mass% | 0.0 | 30.0 | 30.0 | 30.0 | 40.0 | 40.0 | 40.0 | 50.0 | 50.0 | 65.0 | 65.0 |
| HFO-1123 | mass% | 30.0 | 0.0 | 0.0 | 0.0 | 0.0 | 0.0 | 0.0 | 0.0 | 0.0 | 0.0 | 0.0 |
| R32 | mass% | 10.0 | 30.0 | 50.0 | 60.0 | 10.0 | 30.0 | 50.0 | 10.0 | 30.0 | 10.0 | 20.0 |
| R152a | mass% | 52.6 | 32.6 | 12.6 | 2.6 | 42.6 | 22.6 | 2.6 | 32.6 | 12.6 | 17.6 | 7.6 |
| CO2 | mass% | 7.4 | 7.4 | 7.4 | 7.4 | 7.4 | 7.4 | 7.4 | 7.4 | 7.4 | 7.4 | 7.4 |
| GWP | - | 133 | 243 | 353 | 409 | 121 | 231 | 341 | 108 | 219 | 90 | 145 |
| COP ratio | %(relative to R410A) | 104 | 102 | 100 | 100 | 103 | 101 | 99 | 102 | 100 | 100 | 99 |
| Refrigerating capacity ratio | %(relative to R410A) | 81 | 94 | 110 | 120 | 85 | 101 | 119 | 91 | 109 | 101 | 111 |
| Disproportionation reaction(5Mpa) | | - | - | - | - | - | - | - | Non-explosion | Non-explosion | Explosion | Explosion |

**[Table 10]**

| Item | unit | Ref. Ex.1 | Sam.8-12 | Sam.8-13 | Sam.8-14 | Sam.8-15 | Sam.8-16 | Sam.8-17 | Sam.8-18 | Sam.8-19 | Sam.8-20 | Sam.8-21 |
|---|---|---|---|---|---|---|---|---|---|---|---|---|
| E-HFO-1132 | mass% | R410A | 10.0 | 10.0 | 10.0 | 10.0 | 20.0 | 20.0 | 20.0 | 20.0 | 30.0 | 15.0 |
| HFO-1123 | mass% | | 0.0 | 0.0 | 0.0 | 0.0 | 0.0 | 0.0 | 0.0 | 0.0 | 0.0 | 15.0 |
| R32 | mass% | | 10.0 | 30.0 | 50.0 | 60.0 | 10.0 | 30.0 | 50.0 | 60.0 | 10.0 | 10.0 |
| R152a | mass% | | 70.0 | 50.0 | 30.0 | 20.0 | 60.0 | 40.0 | 20.0 | 10.0 | 50.0 | 50.0 |
| CO2 | mass% | | 10.0 | 10.0 | 10.0 | 10.0 | 10.0 | 10.0 | 10.0 | 10.0 | 10.0 | 10.0 |
| GWP | - | 2088 | 155 | 265 | 375 | 430 | 142 | 252 | 363 | 418 | 130 | 130 |
| COP ratio | %(relative to R410A) | 100 | 106 | 104 | 102 | 101 | 105 | 102 | 100 | 99 | 103 | 103 |
| Refrigerating capacity ratio | %(relative to R410A) | 100 | 73 | 86 | 100 | 108 | 79 | 92 | 108 | 117 | 85 | 86 |

| Item | unit | Sam.8-22 | Sam.8-23 | Sam.8-24 | Sam.8-25 | Sam.8-26 | Sam.8-27 | Sam.8-28 | Sam.8-29 | Sam.8-30 | Sam.8-31 | Sam.8-32 |
|---|---|---|---|---|---|---|---|---|---|---|---|---|
| E-HFO-1132 | mass% | 0.0 | 30.0 | 30.0 | 30.0 | 40.0 | 40.0 | 40.0 | 50.0 | 50.0 | 65.0 | 65.0 |
| HFO-1123 | mass% | 30.0 | 0.0 | 0.0 | 0.0 | 0.0 | 0.0 | 0.0 | 0.0 | 0.0 | 0.0 | 0.0 |
| R32 | mass% | 10.0 | 30.0 | 50.0 | 60.0 | 10.0 | 30.0 | 50.0 | 10.0 | 30.0 | 10.0 | 20.0 |
| R152a | mass% | 50.0 | 30.0 | 10.0 | 0.0 | 40.0 | 20.0 | 0.0 | 30.0 | 10.0 | 15.0 | 5.0 |
| CO2 | mass% | 10.0 | 10.0 | 10.0 | 10.0 | 10.0 | 10.0 | 10.0 | 10.0 | 10.0 | 10.0 | 10.0 |
| GWP | - | 130 | 240 | 350 | 405 | 118 | 228 | 338 | 105 | 216 | 87 | 142 |
| COP ratio | %(relative to R410A) | 103 | 101 | 99 | 99 | 102 | 100 | 98 | 101 | 99 | 99 | 98 |
| Refrigerating capacity ratio | %(relative to R410A) | 87 | 99 | 117 | 127 | 91 | 107 | 126 | 97 | 115 | 107 | 117 |
| Disproportionation reaction(5Mpa) | | - | - | - | - | - | - | - | Non-explosion | Non-explosion | Explosion | Explosion |

The coordinates of each point were obtained by the least squares method as follows.

**[Table 11]**

| Point A | | | | | | |
|---|---|---|---|---|---|---|
| a=CO2 | mass% | 0.00 | 1.60 | 4.75 | 7.40 | 10.00 |
| E-HFO-1132 | mass% | 40.80 | 39.20 | 36.05 | 33.40 | 30.80 |
| R32 | mass% | 59.20 | 59.20 | 59.20 | 59.20 | 59.20 |
| R152a | mass% | 0.00 | 0.00 | 0.00 | 0.00 | 0.00 |
| E-HFO-1 132 Approximation formula | | -a+40.8 | | | | |
| R32 Approximation formula | | 59.2 | | | | |
| R152a Approximation formula | | 0.0 | | | | |

### Point B

| | | | | | | | |
|---|---|---|---|---|---|---|---|
| a=CO2 | mass% | 0.00 | 1.60 | 4.75 | 4.75 | 7.40 | 10.00 |
| E-HFO-1132 | mass% | 0.00 | 0.00 | 0.00 | 0.00 | 0.00 | 0.00 |
| R32 | mass% | 50.00 | 50.50 | 51.10 | 51.10 | 51.80 | 52.30 |
| R152a | mass% | 50.00 | 47.90 | 44.15 | 44.15 | 40.80 | 37.70 |
| E-HFO-1 132 Approximation formula | | 0.0 | | | 0.0 | | |
| R32 Approximation formula | | -0.0257a²+0.3536a+50.00 | | | -0.0137a²+0.4304a+49.364 | | |
| R152a Approximation formula | | 0.0257a²-1.3536a+50.00 | | | 0.0137a²-1.4304a+50.636 | | |

**[Table 12]**

| Point A' | | | | | | |
|---|---|---|---|---|---|---|
| a=CO2 | mass% | 0.00 | 1.60 | 4.75 | 7.40 | 10.00 |
| E-HFO-1132 | mass% | 55.60 | 54.00 | 50.85 | 48.20 | 45.60 |
| R32 | mass% | 44.40 | 44.40 | 44.40 | 44.40 | 44.40 |
| R152a | mass% | 0.00 | 0.00 | 0.00 | 0.00 | 0.00 |
| E-HFO-1 132 Approximation formula | | -a+55.6 | | | | |
| R32 Approximation formula | | 44.4 | | | | |
| R152a Approximation formula | | 0.0 | | | | |

### Point B'

| | | | | | | | |
|---|---|---|---|---|---|---|---|
| a=CO2 | mass% | 0.00 | 1.60 | 4.75 | 4.75 | 7.40 | 10.00 |
| E-HFO-1132 | mass% | 0.00 | 0.00 | 0.00 | 0.00 | 0.00 | 0.00 |
| R32 | mass% | 32.00 | 32.30 | 32.90 | 32.90 | 33.60 | 34.10 |
| R152a | mass% | 68.00 | 66.10 | 62.35 | 62.35 | 59.00 | 55.90 |
| E-HFO-1 132 Approximation formula | | 0.0 | | | 0.0 | | |
| R32 Approximation formula | | 0.0006a²+0.1865a+32.00 | | | -0.0137a²+0.4304a+31.164 | | |
| R152a Approximation formula | | -0.0006a²⁻1.1865a+68.00 | | | 0.0137a²-1.4304a+68.836 | | |

**[Table 13]**

| Point C | | | | | | |
|---|---|---|---|---|---|---|
| a=CO2 | mass% | 0.00 | 1.60 | 4.75 | 7.40 | 10.00 |
| E-HFO-1132 | mass% | 60.00 | 60.00 | 60.00 | 60.00 | 60.00 |
| R32 | mass% | 40.00 | 38.40 | 35.25 | 32.60 | 30.00 |
| R152a | mass% | 0.00 | 0.00 | 0.00 | 0.00 | 0.00 |
| E-HFO-1 132 Approximation formula | | 60.0 | | | | |
| R32 Approximation formula | | -a+40.00 | | | | |
| R152a Approximation formula | | 0.00 | | | | |

### Point D

| | | | | | | |
|---|---|---|---|---|---|---|
| a=CO2 | mass% | 0.00 | 1.60 | 4.75 | 7.40 | 10.00 |
| E-HFO-1132 | mass% | 57.00 | 57.00 | 57.00 | 57.00 | 57.00 |
| R32 | mass% | 0.00 | 0.00 | 0.00 | 0.00 | 0.00 |
| R152a | mass% | 43.00 | 41.40 | 38.25 | 35.60 | 33.00 |
| E-HFO-1 132 Approximation formula | | 57.0 | | | | |
| R32 Approximation formula | | 0.0 | | | | |
| R152a Approximation formula | | -a+43.00 | | | | |

**[Table 14]**

| Point O | | | | | | |
|---|---|---|---|---|---|---|
| a=CO2 | mass% | 0.00 | 1.60 | 4.75 | 7.40 | 10.00 |
| E-HFO-1132 | mass% | 0.00 | 0.00 | 0.00 | 0.00 | 0.00 |
| R32 | mass% | 0.00 | 0.00 | 0.00 | 0.00 | 0.00 |
| R152a | mass% | 100.00 | 98.40 | 95.25 | 92.60 | 90.00 |
| E-HFO-1 132 Approximation formula | | 0.00 | | | | |
| R32 Approximation formula | | 0.00 | | | | |
| R152a Approximation formula | | -a+100.00 | | | | |

**[Table 15]**

| Point E | | | | | | | |
|---|---|---|---|---|---|---|---|
| a=CO2 | mass% | 0.00 | 1.60 | 4.75 | 4.75 | 7.40 | 10.00 |
| E-HFO-1132 | mass% | 50.70 | 45.30 | 34.60 | 34.60 | 25.30 | 16.20 |
| R32 | mass% | 0.00 | 0.00 | 0.00 | 0.00 | 0.00 | 0.00 |
| R152a | mass% | 49.30 | 53.10 | 60.65 | 60.65 | 67.30 | 73.80 |
| E-HFO-1 132 Approximation formula | | -0.0046a²⁻3.3676a+50.70 | | | 0.0018a²-3.5313a+51.333 | | |
| R32 Approximation formula | | 0 | | | 0.00 | | |
| R152a Approximation formula | | 0.0046a²+2.3676a+49.30 | | | -0.0018a²+2.5313a+48.667 | | |

### Point E'

| | | | | |
|---|---|---|---|---|
| a=CO2 | mass% | 0.00 | 1.60 | 4.75 |
| E-HFO-1132 | mass% | 12.20 | 8.10 | 0.00 |
| R32 | mass% | 34.70 | 34.10 | 32.90 |
| R152a | mass% | 53.10 | 56.20 | 62.35 |
| E-HFO-1 132 Approximation formula | | -0.0019a²-2.5595a+12.2 | | |
| R32 Approximation formula | | -0.0013a²⁻0.373a+34.7 | | |
| R152a Approximation formula | | 0.0032a²+1.9325a+53.1 | | |

**[Table 16]**

| Point F | | | | | | | |
|---|---|---|---|---|---|---|---|
| a=CO2 | mass% | 0.00 | 1.60 | 4.75 | 4.75 | 7.40 | 10.00 |
| E-HFO-1132 | mass% | 0.00 | 0.00 | 0.00 | 0.00 | 0.00 | 0.00 |
| R32 | mass% | 47.60 | 42.70 | 32.90 | 32.90 | 24.60 | 16.20 |
| R152a | mass% | 52.40 | 55.70 | 62.35 | 62.35 | 68.00 | 73.80 |
| E-HFO-1 132 Approximation formula | | 0.0 | | | 0.0 | | |
| R32 Approximation formula | | -0.0102a²-3.0461 a+47.6 | | | -0.0188a²-2.9037a+47.117 | | |
| R152a Approximation formula | | 0.0102a²+2.0461 a+52.4 | | | 0.0188a²+1.9037a+52.883 | | |

It is understood, based on these results, that when the mass% of HFO-1132(E), R32, HFC-152a, and CO2 in the refrigerant of the present disclosure based on their sum are respectively represented by x, y, z, and a (wherein 0 < a ≤ 10.0), in a ternary composition diagram in which the sum of HFO-1132(E), R32, and HFC-152a is (100-a) mass%, if coordinates (x,y,z) satisfy the following requirements, a disproportionation reaction does not occur at 5 MPa and 150°C, and GWP is 400 or less.

### <Requirements>

The coordinates (x,y,z) are, when 0 < a ≤ 4.75, within the range of a figure surrounded by straight lines CD, DO, OB, BA, and AC that connect the following 5 points:
point C (60.0, -a+40.0, 0.0),
point D (57.0, 0.0, -a+43.0),
point 0 (0.0, 0.0, -a+100),
point B (0.0, -0.0257a²+0.3536a+50.00, 0.0257a²-1.3536a+50.00), and
point A (-a+40.8, 59.2, 0.0), or

on the straight lines CD, DO, and BA (excluding the points C, O, B, and A), and
   the coordinates (x,y,z) are, when 4.75 < a ≤ 10.0, within the range of a figure surrounded by straight lines CD, DO, OB, BA, and AC that connect the following 5 points:
   point C (60.0, -a+40.0, 0.0),
   point D (57.0, 0.0, -a+43.0),
   point O (0.0, 0.0, -a+100),
   point B (0.0, -0.0137a²+0.4304a+49.364, 0.0137a²-1.4304a+50.636), and
   point A (-a+40.8, 59.2, 0.0), or
on the straight lines CD, DO, and BA (excluding the points C, O, B, and A).

It is understood that in the refrigerant of the present disclosure, when the coordinates (x,y,z) satisfy the following requirements, a disproportionation reaction does not occur at 5 MPa and 150°C, GWP is 400 or less, and a refrigerating capacity (Cap) ratio relative to R410A is 70% or more.

### <Requirements>

When the mass% of the component X, R32, HFC-152a, and CO₂ in the refrigerant based on their sum are respectively represented by x, y, z, and a (wherein 0 < a ≤ 10.0), in a ternary composition diagram in which the sum of the component X, R32, and HFC-152a is (100-a) mass%, coordinates (x,y,z) are, when 0 < a ≤ 4.75, within the range of a figure surrounded by straight lines CD, DE, EE', E'F, FB, BA and AC that connect the following 7 points:
point C (60.0, -a+40.0, 0.0)
point D (57.0, 0.0, -a+43.0),
point E (-0.0046a²-3.3676a+50.70, 0.0, 0.0046a²+2.3676a+49.30),
point E' (-0.0019a²-2.5595a+12.2, -0.0013a²-0.373a+34.7, 0.0032a²+1.9325a+53.1),
point F (0.0, -0.0102a²-3.0461a+47.6, 0.0102a²+2.0461a+52.4),
point B (0.0, -0.0257a²+0.3536a+50.00, 0.0257a²-1.3536a+50.00), and
point A (-a+40.8, 59.2, 0.0), or

on the straight lines CD, DE, EE', E'F, and BA (excluding the points C, F, B, and A), and
   the coordinates (x,y,z) are, when 4.75 < a ≤ 10.0, within the range of a figure surrounded by straight lines CD, DE, EE', EF, FB, BA and AC that connect the following 6 points:
   point C (60.0, -a+40.0, 0.0)
   point D (57.0, 0.0, -a+43.0),
   point E (0.0018a²-3.5313a+51.333, 0.0, - 0.0018a²+2.5313a+48.667),
   point F (0.0, -0.0188a²-2.9037a+47.117, 0.0188a²+1.9037a+52.883),
   point B (0.0, -0.0137a²+0.4304a+49.364, 0.0137a²-1.4304a+50.636), and
   point A (-a+40.8, 59.2, 0.0), or
on the straight lines CD, DE, EF, FB, and BA (excluding the points C, F, B, and A).

It is understood that in the refrigerant of the present disclosure, when the coordinates (x,y,z) satisfy the following requirements, a disproportionation reaction does not occur at 5 MPa and 150°C, GWP is 300 or less, and a refrigerating capacity (Cap) ratio relative to R410A is 70% or more.

### <Requirements>

The coordinates (x,y,z) are, when 0 < a ≤ 4.75, within the range of a figure surrounded by straight lines CD, DE, EE', and E'A' that connect the following 5 points:
point C (60.0, -a+40.0, 0.0)
point D (57.0, 0.0, -a+43.0),
point E (-0.0046a²-3.3676a+50.70, 0.0, 0.0046a²+2.3676a+49.30),
point E' (-0.0019a²-2.5595a+12.2, -0.0013a²-0.373a+34.7, 0.0032a²+1.9325a+53.1), and
point A' (-a+55.6, 44.4, 0.0), or

on the straight lines CD, DE, EE', and E'A', and
   the coordinates (x,y,z) are, when 4.75 < a ≤ 10.0, within the range of a figure surrounded by straight lines CD, DE, EF, FB', and B'A' that connect the following 6 points:
   point C (60.0, -a+40.0, 0.0)
   point D (57.0, 0.0, -a+43.0),
   point E (0.0018a²-3.5313a+51.333, 0.0, - 0.0018a²+2.5313a+48.667),
   point F (0.0, -0.0188a²-2.9037a+47.117, 0.0188a²+1.9037a+52.883),
   point B' (0.0, -0.0137a²+0.4304a+31.164, 0.0137a²-1.4304a+68.836), and
   point A' (-a+55.6, 44.4, 0.0), or
on the straight lines CD, DE, EF, and FA' (excluding the points C, F, and A').

It is understood from the test results described above that the same effects can be obtained by using HFO-1132(E) and/or HFO-1123 instead of HFO-1132(E) in the refrigerant of the present disclosure.

**[Table 17]**

| Item | | unit | Ref. Ex.2 | Com.Ex.0-11 | Com.Ex.0-12 | Com.Ex.1-13 | Com.Ex.0-14 | Com.Ex.0-15 | Com.Ex.0-16 | Com.Ex.0-17 |
|---|---|---|---|---|---|---|---|---|---|---|
| | | | | A" | B" | J | K | C | D | D' |
| Proportion of formulations | E-HFO-1132 | mass% | R1234yf | 77.9 | 0.0 | 28.2 | 19.2 | 60.0 | 57.0 | 58.3 |
| | R32 | mass% | | 22.1 | 4.7 | 0.0 | 9.0 | 40.0 | 0.0 | 17.7 |
| | R152a | mass% | | 0.0 | 95.3 | 71.8 | 71.8 | 0.0 | 43.0 | 23.9 |
| | CO2 | mass% | | 0.0 | 0.0 | 0.0 | 0.0 | 0.0 | 0.0 | 0.0 |
| GWP(AR4) | | - | 4 | 150 | 150 | 89 | 150 | 271 | 54 | 150 |
| COP ratio(relative to R1234yf) | | % | 100 | 100 | 108 | 106 | 106 | 101 | 103 | 102 |
| Refrigerating capacity ratio(relative to R1234yf) | | % | 100 | 302 | 104 | 140 | 141 | 312 | 188 | 235 |
| Power consumption of driving force | | % | 100 | 100 | 100 | 100 | 100 | 100 | 100 | 100 |
| Power consumption for heating | | % | 95 | 33 | 95 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 50 | 84 | 84 | 84 | 84 | 84 |
| Boiling point | | °C | -29.5 | -54.2 | -27.1 | -40.0 | -40.0 | -54.3 | -46.4 | -50.7 |
| Heating method | | system | Electric heater | Heat pump | Electric heater | Heat pump | Heat pump | Heat pump | Heat pump | Heat pump |

**[Table 18]**

| Item | | unit | Ref. Ex.2 | Com.Ex.1-8 | Com.Ex.1-9 | Ex.1-4 | Ex.1-5 | Com.Ex.1-10 | Ex.1-6 | Ex.1-7 |
|---|---|---|---|---|---|---|---|---|---|---|
| | | | | A" | B" | J | K | C | D | D' |
| Proportion of formulations | E-HFO-1132 | mass% | R1234yf | 76.3 | 0.0 | 15.3 | 9.2 | 60.0 | 57.0 | 58.3 |
| | R32 | mass% | | 22.1 | 5.0 | 0.0 | 7.1 | 40.0 | 0.0 | 18.1 |
| | R152a | mass% | | 0.0 | 93.4 | 83.1 | 82.1 | 0.0 | 41.4 | 22.0 |
| | CO2 | mass% | | 1.6 | 1.6 | 1.6 | 1.6 | 1.6 | 1.6 | 1.6 |
| GWP(AR4) | | - | 4 | 150 | 150 | 103 | 150 | 271 | 52 | 150 |
| COP ratio(relative to R1234yf) | | % | 100 | 100 | 107 | 106 | 106 | 100 | 103 | 101 |
| Refrigerating capacity ratio(relative to R1234yf) | | % | 100 | 310 | 110 | 126 | 128 | 319 | 196 | 246 |
| Power consumption of driving force | | % | 100 | 100 | 100 | 100 | 100 | 100 | 100 | 100 |
| Power consumption for heating | | % | 95 | 33 | 95 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 50 | 84 | 84 | 84 | 84 | 84 |
| Boiling point | | °C | -29.5 | -55.9 | -34.0 | -40.0 | -40.0 | -56.0 | -49.2 | -53.0 |
| Heating method | | system | Electric heater | Heat pump | Electric heater | Heat pump | Heat pump | Heat pump | Heat pump | Heat pump |

**[Table 19]**

| Item | | unit | Ref. Ex.2 | Com.Ex.2-1 | Com.Ex.2-2 | Ex.2-1 | Com.Ex.2-3 | Ex.2-2 | Ex.2-3 |
|---|---|---|---|---|---|---|---|---|---|
| | | | | A" | B"=K | J | C | D | D' |
| Proportion of formulations | E-HFO-1132 | mass% | R1234yf | 74.6 | 0.0 | 3.3 | 60.0 | 57.0 | 58.4 |
| | R32 | mass% | | 22.1 | 5.4 | 0.0 | 36.7 | 0.0 | 18.5 |
| | R152a | mass% | | 0.0 | 91.3 | 93.4 | 0.0 | 39.7 | 19.8 |
| | CO2 | mass% | | 3.3 | 3.3 | 3.3 | 3.3 | 3.3 | 3.3 |
| GWP(AR4) | | - | 4 | 150 | 150 | 116 | 248 | 50 | 150 |
| COP ratio (relative to R1234yf) | | % | 100 | 100 | 106 | 105 | 100 | 102 | 101 |
| Refrigerating capacity ratio(relative to R1234yf) | | % | 100 | 318 | 117 | 114 | 326 | 206 | 259 |
| Power consumption of driving force | | % | 100 | 100 | 100 | 100 | 100 | 100 | 100 |
| Power consumption for heating | | % | 95 | 33 | 33 | 33 | 33 | 33 | 33 |
| Possible travel distance (without heating) | | % | 100 | 100 | 100 | 100 | 100 | 100 | 100 |
| Possible travel distance (with heating) | | % | 50 | 84 | 84 | 84 | 84 | 84 | 84 |
| Boiling point | | °C | -29.5 | -57.8 | -40.0 | -40.0 | -57.8 | -52.1 | -55.4 |
| Heating method | | system | Electric heater | Heat pump | Heat pump | Heat pump | Heat pump | Heat pump | Heat pump |

**[Table 20]**

| Item | | unit | Ref. Ex.2 | Com.Ex.3-1 | Com.Ex.3-2 | Ex.3-1 | Com.Ex.3-3 | Ex.3-2 | Ex.3-3 |
|---|---|---|---|---|---|---|---|---|---|
| | | | | A" | B" | K=J=O | C | D | D' |
| Proportion of formulations | E-HFO-1132 | mass% | R1234yf | 74.0 | 0.0 | 0.0 | 60.0 | 57.0 | 58.4 |
| | R32 | mass% | | 22.1 | 5.5 | 0.0 | 36.1 | 0.0 | 18.6 |
| | R152a | mass% | | 0.0 | 90.6 | 96.1 | 0.0 | 39.1 | 19.1 |
| | CO2 | mass% | | 3.9 | 3.9 | 3.9 | 3.9 | 3.9 | 3.9 |
| GWP(AR4) | | - | 4 | 150 | 150 | 119 | 244 | 49 | 150 |
| COP ratio(relative to R1234yf) | | % | 100 | 100 | 105 | 105 | 100 | 102 | 100 |
| Refrigerating capacity ratio(relative to R1234yf) | | % | 100 | 321 | 120 | 111 | 329 | 209 | 263 |
| Power consumption of driving force | | % | 100 | 100 | 100 | 100 | 100 | 100 | 100 |
| Power consumption for heating | | % | 95 | 33 | 33 | 33 | 33 | 33 | 33 |
| Possible travel distance (without heating) | | % | 100 | 100 | 100 | 100 | 100 | 100 | 100 |
| Possible travel distance (with heating) | | % | 50 | 84 | 84 | 84 | 84 | 84 | 84 |
| Boiling point | | °C | -29.5 | -58.4 | -41.9 | -40.0 | -58.4 | -53.1 | -56.2 |
| Heating method | | system | Electric heater | Heat pump | Heat pump | Heat pump | Heat pump | Heat pump | Heat pump |

**[Table 21]**

| Item | | unit | Ref. Ex.2 | Com.Ex.5-8 | Com.Ex.5-9 | Ex.5-3 | Com.Ex.5-10 | Ex.5-4 |
|---|---|---|---|---|---|---|---|---|
| | | | | A" | B" | C | D | D' |
| Proportion of formulations | E-HFO-1132 | mass% | R1234yf | 70.5 | 0.0 | 60.0 | 57.0 | 58.5 |
| | R32 | mass% | | 22.1 | 6.3 | 32.6 | 0.0 | 19.4 |
| | R152a | mass% | | 0.0 | 86.3 | 0.0 | 35.6 | 14.7 |
| | CO2 | mass% | | 7.4 | 7.4 | 7.4 | 7.4 | 7.4 |
| GWP(AR4) | | - | 4 | 150 | 150 | 221 | 45 | 150 |
| COP ratio(relative to R1234yf) | | % | 100 | 99 | 104 | 99 | 101 | 99 |
| Refrigerating capacity ratio(relative to R1234yf) | | % | 100 | 339 | 137 | 345 | 230 | 291 |
| Power consumption of driving force | | % | 100 | 100 | 100 | 100 | 100 | 100 |
| Power consumption for heating | | % | 95 | 33 | 33 | 33 | 33 | 33 |
| Possible travel distance (without heating) | | % | 100 | 100 | 100 | 100 | 100 | 100 |
| Possible travel distance (with heating) | | % | 50 | 84 | 84 | 84 | 84 | 84 |
| Boiling point | | °C | -29.5 | -61.9 | -50.6 | -61.8 | -58.2 | -60.6 |
| Heating method | | system | Electric heater | Heat pump | Heat pump | Heat pump | Heat pump | Heat pump |

**[Table 22]**

| Item | | unit | Ref. Ex.2 | Com.Ex.8-8 | Com.Ex.8-9 | Ex.8-10 | Com.Ex.8-3 | Ex.84 |
|---|---|---|---|---|---|---|---|---|
| | | | | A" | B" | C | D | D' |
| Proportion of formulations | E-HFO-1132 | mass% | R1234yf | 67.9 | 0.0 | 60.0 | 57.0 | 58.5 |
| | R32 | mass% | | 22.1 | 6.9 | 30.0 | 0.0 | 20.0 |
| | R152a | mass% | | 0.0 | 83.1 | 0.0 | 33.0 | 11.5 |
| | CO2 | mass% | | 10.0 | 10.0 | 10.0 | 10.0 | 10.0 |
| GWP(AR4) | | - | 4 | 150 | 150 | 203 | 42 | 150 |
| COP ratio(relative to R1234yf) | | % | 100 | 98 | 103 | 98 | 100 | 99 |
| Refrigerating capacity ratio(relative to R1234yf) | | % | 100 | 353 | 150 | 358 | 247 | 313 |
| Power consumption of driving force | | % | 100 | 100 | 100 | 100 | 100 | 100 |
| Power consumption for heating | | % | 95 | 33 | 33 | 33 | 33 | 33 |
| Possible travel distance (without heating) | | % | 100 | 100 | 100 | 100 | 100 | 100 |
| Possible travel distance (with heating) | | % | 50 | 84 | 84 | 84 | 84 | 84 |
| Boiling point | | °C | -29.5 | -64.2 | -55.3 | -64.1 | -61.5 | -63.4 |
| Heating method | | system | Electric heater | Heat pump | Heat pump | Heat pump | Heat pump | Heat pump |

**[Table 23]**

| Item | | unit | Ref. Ex.2 | Sam.1-31 | Sam.1-32 | Sam.1-33 | Sam.1-34 | Sam.1-35 | Sam.1-36 | Sam.1-37 | Sam.1-38 |
|---|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 93.4 | 85.9 | 78.4 | 78.4 | 70.9 | 63.4 | 63.4 | 55.9 |
| | CO2 | mass% | | 1.6 | 1.6 | 1.6 | 1.6 | 1.6 | 1.6 | 1.6 | 1.6 |
| GWP(AR4) | | - | 4 | 116 | 157 | 199 | 97 | 139 | 180 | 79 | 120 |
| COP ratio(relative to R1234yf) | | % | 100 | 106 | 106 | 106 | 106 | 105 | 105 | 105 | 104 |
| Refrigerating capacity ratio(relative to R1234yf) | | % | 100 | 110 | 122 | 134 | 134 | 147 | 161 | 158 | 173 |
| Power consumption of diving force | | % | 100 | 100 | 100 | 100 | 100 | 100 | 100 | 100 | 100 |
| Power consumption for heating | | % | 95 | 95 | 95 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 50 | 50 | 50 | 84 | 84 | 84 | 84 | 84 | 84 |
| Boiling point | | °C | -29.5 | -35.1 | -38.1 | -40.6 | -41.6 | -43.8 | -45.6 | -45.4 | -47.3 |
| Heating method | | system | Electric heater | Electric heater | Electric heater | Heat pump | Heat pump | Heat pump | Heat pump | Heat pump | Heat pump |

| Item | | unit | Sam.1-39 | Sam.1-40 | Sam.1-41 | Sam.1-42 | Sam.1-43 | Sam.1-44 | Sam.1-45 | Sam.1-46 | Sam.1-47 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 55.9 | 55.9 | 43.4 | 48.4 | 38.4 | 28.4 | 33.4 | 23.4 | 8.4 |
| | CO2 | mass% | 1.6 | 1.6 | 1.6 | 1.6 | 1.6 | 1.6 | 1.6 | 1.6 | 1.6 |
| GWP(AR4) | | - | 120 | 120 | 189 | 61 | 116 | 171 | 42 | 97 | 180 |
| COP ratio(relative to R1234yf) | | % | 104 | 104 | 103 | 103 | 102 | 102 | 102 | 101 | 100 |
| Refrigerating capacity ratio(relative to R1234yf) | | % | 176 | 177 | 199 | 184 | 207 | 231 | 212 | 239 | 286 |
| Power consumption of diving force | | % | 100 | 100 | 100 | 100 | 100 | 100 | 100 | 100 | 100 |
| Power consumption for heating | | % | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 84 | 84 | 84 | 84 | 84 | 84 | 84 | 84 | 84 |
| Boiling point | | °C | -49.9 | -51.5 | -49.7 | -48.1 | -50.3 | -52.1 | -50.4 | -52.5 | -54.9 |
| Heating method | | system | Heat pump | Heat pump | Heat pump | Heat pump | Heat pump | Heat pump | Heat pump | Heat pump | Heat pump |
| Disproportionation reaction(5Mpa) | | - | - | - | - | Non-explosion | Non-explosion | Non-explosion | Explosion | Explosion | Explosion |

**[Table 24]**

| Item | | unit | Ref. Ex.2 | Sam.2-12 | Sam.2-13 | Sam.2-14 | Sam.2-15 | Sam.2-16 | Sam.1-17 | Sam.2-18 | Sam.2-19 |
|---|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 91.7 | 84.2 | 76.7 | 76.7 | 69.2 | 61.7 | 61.7 | 54.2 |
| | CO2 | mass% | | 3.3 | 3.3 | 3.3 | 3.3 | 3.3 | 3.3 | 3.3 | 3.3 |
| GWP(AR4) | | - | 4 | 114 | 155 | 196 | 95 | 137 | 178 | 77 | 118 |
| COP ratio(relative to R1234yf) | | % | 100 | 105 | 105 | 105 | 105 | 105 | 104 | 104 | 103 |
| Refrigerating capacity ratio(relative to R1234yf) | | % | 100 | 117 | 129 | 142 | 142 | 155 | 169 | 167 | 182 |
| Power consumption of driving face | | % | 100 | 100 | 100 | 100 | 100 | 100 | 100 | 100 | 100 |
| Power consumption for heating | | % | 95 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 50 | 84 | 84 | 84 | 84 | 84 | 84 | 84 | 84 |
| Boiling point | | °C | -29.5 | -40.9 | -43.2 | -45.1 | -45.9 | -47.6 | -49.1 | -48.9 | -50.4 |
| Heating method | | system | Electric heater | Heat pump | Heat pump | Heat pump | Heat pump | Heat pump | Heat pump | Heat pump | Heat pump |

| Item | | unit | Sam.2-20 | Sam.2-21 | Sam.2-22 | Sam.2-23 | Sam.2-24 | Sam.2-25 | Sam.2-26 | Sam.2-27 | Sam.2-28 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 54.2 | 54.2 | 41.7 | 46.7 | 36.7 | 26.7 | 31.7 | 21.7 | 6.7 |
| | CO2 | mass% | 3.3 | 3.3 | 3.3 | 3.3 | 3.3 | 3.3 | 3.3 | 3.3 | 3.3 |
| GWP(AR4) | | - | 118 | 118 | 187 | 58 | 114 | 169 | 40 | 95 | 178 |
| COP ratio(relative to R1234yf) | | % | 103 | 103 | 103 | 103 | 102 | 101 | 101 | 101 | 100 |
| Refrigerating capacity ratio(relative to R1234yf) | | % | 185 | 186 | 209 | 193 | 216 | 242 | 222 | 250 | 298 |
| Power consumption of diving force | | % | 100 | 100 | 100 | 100 | 100 | 100 | 100 | 100 | 100 |
| Power consumption for heating | | % | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 84 | 84 | 84 | 84 | 84 | 84 | 84 | 84 | 84 |
| Boiling point | | °C | -52.9 | -54.3 | -52.5 | -51.2 | -53.0 | -54.6 | -53.1 | -54.9 | -57.0 |
| Heating method | | system | Heat pump | Heat pump | Heat pump | Heat pump | Heat pump | Heat pump | Heat pump | Heat pump | Heat pump |
| Disproportionation reaction(5Mpa) | | - | - | - | - | Non-explosion | Non-explosion | Non-explosion | Explosion | Explosion | Explosion |

**[Table 25]**

| Item | | unit | Ref. Ex.2 | Sam.3-12 | Sam.3-13 | Sam.3-14 | Sam.3-15 | Sam.3-16 | Sam.3-17 | Sam.3-18 | Sam.3-19 |
|---|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 91.1 | 83.6 | 76.1 | 76.1 | 68.6 | 61.1 | 61.1 | 53.6 |
| | CO2 | mass% | | 3.9 | 3.9 | 3.9 | 3.9 | 3.9 | 3.9 | 3.9 | 3.9 |
| GWP(AR4) | | - | 4 | 113 | 154 | 196 | 95 | 136 | 177 | 76 | 117 |
| COP ratio(relative to R1234yf) | | % | 100 | 105 | 105 | 105 | 105 | 104 | 104 | 104 | 103 |
| Refrigerating capacity ratio(relative to R1234yf) | | % | 100 | 119 | 132 | 145 | 144 | 158 | 172 | 170 | 185 |
| Power consumption of diving force | | % | 100 | 100 | 100 | 100 | 100 | 100 | 100 | 100 | 100 |
| Power consumption for heating | | % | 95 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 50 | 84 | 84 | 84 | 84 | 84 | 84 | 84 | 84 |
| Boiling point | | °C | -29.5 | -42.7 | 44.8 | -46.5 | -47.3 | -48.9 | -50.3 | -50.0 | -51.5 |
| Heating method | | system | Electric heater | Heat pump | Heat pump | Heat pump | Heat pump | Heat pump | Heat pump | Heat pump | Heat pump |

| Item | | unit | Sam.3-20 | Sam.3-21 | Sam.3-22 | Sam.3-23 | Sam.3-24 | Sam.3-25 | Sam.3-26 | Sam.3-27 | Sam.3-28 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 53.6 | 53.6 | 41.1 | 46.1 | 36.1 | 26.1 | 31.1 | 21.1 | 6.1 |
| | CO2 | mass% | 3.9 | 3.9 | 3.9 | 3.9 | 3.9 | 3.9 | 3.9 | 3.9 | 3.9 |
| GWP(AR4) | | - | 117 | 117 | 186 | 58 | 113 | 168 | 39 | 94 | 177 |
| COP ratio(relative to R1234yf) | | % | 103 | 103 | 102 | 102 | 102 | 101 | 101 | 100 | 100 |
| Refrigerating capacity ratio(relative to R1234yf) | | % | 189 | 190 | 212 | 196 | 220 | 246 | 225 | 254 | 303 |
| Power consumption of diving force | | % | 100 | 100 | 100 | 100 | 100 | 100 | 100 | 100 | 100 |
| Power consumption for heating | | % | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 84 | 84 | 84 | 84 | 84 | 84 | 84 | 84 | 84 |
| Boiling point | | °C | -53.9 | -55.2 | -53.4 | -52.2 | -53.9 | -55.4 | -54.1 | -55.8 | -57.8 |
| Heating method | | system | Heat pump | Heat pump | Heat pump | Heat pump | Heat pump | Heat pump | Heat pump | Heat pump | Heat pump |
| Disproportionation reaction(5Mpa) | | - | - | - | - | Non-explosion | Non-explosion | Non-explosion | Explosion | Explosion | Explosion |

**[Table 26]**

| Item | | unit | Ref. Ex.2 | Sam.5-31 | Sam.5-32 | Sam.5-33 | Sam.5-34 | Sam.5-35 | Sam.5-36 | Sam.5-37 | Sam.5-38 |
|---|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 87.6 | 80.1 | 72.6 | 72.6 | 65.1 | 57.6 | 57.6 | 50.1 |
| | CO2 | mass% | | 7.4 | 7.4 | 7.4 | 7.4 | 7.4 | 7.4 | 7.4 | 7.4 |
| GWP(AR4) | | - | 4 | 109 | 150 | 191 | 90 | 132 | 173 | 72 | 113 |
| COP ratio(relative to R1234yf) | | % | 100 | 104 | 104 | 104 | 103 | 103 | 103 | 103 | 102 |
| Refrigerating capacity ratio(relative to R1234yf) | | % | 100 | 135 | 148 | 162 | 161 | 176 | 191 | 188 | 204 |
| Power consumption of diving force | | % | 100 | 100 | 100 | 100 | 100 | 100 | 100 | 100 | 100 |
| Power consumption for heating | | % | 95 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 50 | 84 | 84 | 84 | 84 | 84 | 84 | 84 | 84 |
| Boiling point | | °C | -29.5 | -51.1 | -52.4 | -53.5 | -54.1 | -55.1 | -56.1 | -56.0 | -57.0 |
| Heating method | | system | Electric heater | Heat pump | Heat pump | Heat pump | Heat pump | Heat pump | Heat pump | Heat pump | Heat pump |

| Item | | unit | Sam.5-39 | Sam5-40 | Sam.5-41 | Sam.5-42 | Sam.543 | Sam.544 | Sam.545 | Sam.546 | Sam.5-47 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 50.1 | 50.1 | 37.6 | 42.6 | 32.6 | 22.6 | 27.6 | 17.6 | 2.6 |
| | CO2 | mass% | 7.4 | 7.4 | 7.4 | 7.4 | 7.4 | 7.4 | 7.4 | 7.4 | 7.4 |
| GWP(AR4) | | - | 113 | 113 | 182 | 53 | 108 | 164 | 35 | 90 | 173 |
| COP ratio(relative to R1234yf) | | % | 102 | 102 | 101 | 101 | 100 | 100 | 100 | 99 | 99 |
| Refrigerating capacity ratio(relative to R1234yf) | | % | 209 | 211 | 233 | 216 | 241 | 269 | 248 | 278 | 332 |
| Power consumption of diving force | | % | 100 | 100 | 100 | 100 | 100 | 100 | 100 | 100 | 100 |
| Power consumption for heating | | % | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 84 | 84 | 84 | 84 | 84 | 84 | 84 | 84 | 84 |
| Boiling point | | °C | -59.1 | -60.0 | -58.4 | -57.5 | -58.8 | -59.8 | -59.0 | -60.2 | -61.6 |
| Heating method | | system | Heat pump | Heat pump | Heat pump | Heat pump | Heat pump | Heat pump | Heat pump | Heat pump | Heat pump |
| Disproportionation reaction(5Mpa) | | - | - | - | - | Non-explosion | Non-explosion | Non-explosion | Explosion | Explosion | Explosion |

**[Table 27]**

| Item | | unit | Ref. Ex.2 | Sam.8-31 | Sam8-32 | Sam.8-33 | Sam.8-34 | Sam.8-35 | Sam.8-36 | Sam.8-37 | Sam.8-38 |
|---|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 85.0 | 77.5 | 70.0 | 70.0 | 62.5 | 55.0 | 55.0 | 47.5 |
| | CO2 | mass% | | 10.0 | 10.0 | 10.0 | 10.0 | 10.0 | 10.0 | 10.0 | 10.0 |
| GWP(AR4) | | - | 4 | 106 | 147 | 188 | 87 | 128 | 170 | 69 | 110 |
| COP ratio(relative to R1234yf) | | % | 100 | 103 | 103 | 103 | 103 | 103 | 102 | 102 | 101 |
| Refrigerating capacity ratio(relative to R1234yf) | | % | 100 | 147 | 161 | 175 | 175 | 190 | 206 | 202 | 219 |
| Power consumption of diving force | | % | 100 | 100 | 100 | 100 | 100 | 100 | 100 | 100 | 100 |
| Power consumption for heating | | % | 95 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 50 | 84 | 84 | 84 | 84 | 84 | 84 | 84 | 84 |
| Boiling point | | °C | -29.5 | -55.7 | -56.6 | -57.5 | -58.1 | -58.9 | -59.6 | -59.6 | -60.3 |
| Heating method | | system | Electric heater | Heat pump | Heat pump | Heat pump | Heat pump | Heat pump | Heat pump | Heat pump | Heat pump |

| Item | | unit | Sam.8-39 | Sam.840 | Sam.8-41 | Sam.8-42 | Sam.843 | Sam.8-44 | Sam.845 | Sam.846 | Sam.8-47 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 47.5 | 47.5 | 35.0 | 40.0 | 30.0 | 20.0 | 25.0 | 15.0 | 0.0 |
| | CO2 | mass% | 10.0 | 10.0 | 10.0 | 10.0 | 10.0 | 10.0 | 10.0 | 10.0 | 10.0 |
| GWP(AR4) | | - | 110 | 110 | 179 | 50 | 105 | 160 | 32 | 87 | 170 |
| COP ratio(relative to R1234yf) | | % | 101 | 101 | 100 | 100 | 100 | 99 | 99 | 99 | 98 |
| Refrigerating capacity ratio(relative to R1234yf) | | % | 225 | 227 | 250 | 232 | 258 | 288 | 265 | 298 | 355 |
| Power consumption of diving force | | % | 100 | 100 | 100 | 100 | 100 | 100 | 100 | 100 | 100 |
| Power consumption for heating | | % | 33 | 33 | 33 | 33 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 84 | 84 | 84 | 84 | 84 | 84 | 84 | 84 | 84 |
| Boiling point | | °C | -62.3 | -63.0 | -61.4 | -60.9 | -61.9 | -62.7 | -62.2 | -63.1 | -64.2 |
| Heating method | | system | Heat pump | Heat pump | Heat pump | Heat pump | Heat pump | Heat pump | Heat pump | Heat pump | Heat pump |
| Disproportionation reaction(5Mpa) | | - | - | - | - | Non-explosion | Non-explosion | Non-explosion | Explosion | Explosion | Explosion |

The coordinates of each point were obtained by the least squares method as follows.

**[Table 28]**

| Point A" | | | | | | | |
|---|---|---|---|---|---|---|---|
| a=CO2 | mass% | 0.0 | 1.6 | 3.3 | 3.9 | 7.4 | 10.0 |
| E-HFO-1132 | mass% | 77.9 | 76.3 | 74.6 | 74.0 | 70.5 | 67.9 |
| R32 | mass% | 22.1 | 22.1 | 22.1 | 22.1 | 22.1 | 22.1 |
| R152a | mass% | 0.0 | 0.0 | 0.0 | 0.0 | 0.0 | 0.0 |
| E-HFO-1 132 Approximation formula | | -a+77.9 | | | | | |
| R32 Approximation formula | | 22.1 | | | | | |
| R152a Approximation formula | | 0.0 | | | | | |

### Point B"

| | | | | | | | |
|---|---|---|---|---|---|---|---|
| a=CO2 | mass% | 0.0 | 1.6 | 3.3 | 3.9 | 7.4 | 10.0 |
| E-HFO-1132 | mass% | 0.0 | 0.0 | 0.0 | 0.0 | 0.0 | 0.0 |
| R32 | mass% | 4.7 | 5.0 | 5.4 | 5.5 | 6.3 | 6.9 |
| R152a | mass% | 95.3 | 93.4 | 91.3 | 90.6 | 86.3 | 83.1 |
| E-HFO-1 132 Approximation formula | | 0.0 | | | | | |
| R32 Approximation formula | | 0.0018a²+0.2035a+4.6903 | | | | | |
| R152a Approximation formula | | -0.018a²-1.2035a+95.31 | | | | | |

**[Table 29]**

| Point J | | | | | | |
|---|---|---|---|---|---|---|
| a=CO2 | mass% | 0.0 | 1.6 | 3.3 | 3.3 | 3.9 |
| E-HFO-1132 | mass% | 28.2 | 15.3 | 3.3 | 3.3 | 0.0 |
| R32 | mass% | 0.0 | 0.0 | 0.0 | 0.0 | 0.0 |
| R152a | mass% | 71.8 | 83.1 | 93.4 | 93.4 | 96.1 |
| E-HFO-1 132 Approximation formula | | 0.3041a²-8.5491a+28.2 | | | -5.5a+21.45 | |
| R32 Approximation formula | | 0.0 | | | 0.0 | |
| R152a Approximation formula | | -0.3041a²+7.5491a+71.8 | | | 4.5a+78.55 | |

### Point K

| | | | | | | |
|---|---|---|---|---|---|---|
| a=CO2 | mass% | 0.0 | 1.6 | 3.3 | 3.3 | 3.9 |
| E-HFO-1132 | mass% | 19.2 | 9.2 | 0.0 | 0.0 | 0.0 |
| R32 | mass% | 9.0 | 7.1 | 5.4 | 5.4 | 0.0 |
| R152a | mass% | 71.8 | 82.1 | 91.3 | 91.3 | 96.1 |
| E-HFO-1 132 Approximation formula | | 0.254a²-6.6564a+19.2 | | | 0.0 | |
| R32 Approximation formula | | 0.0568a²-1.2784a+9.0 | | | -9.0a+35.1 | |
| R152a Approximation formula | | -0.3108a²+6.9348a+71.8 | | | 8.0a+64.9 | |

**[Table 30]**

| Point D' | | | | | | | | | |
|---|---|---|---|---|---|---|---|---|---|
| a=CO2 | mass% | 0.0 | 1.6 | 3.3 | 3.3 | 3.9 | 3.9 | 7.4 | 10.0 |
| E-HFO-1132 | mass% | 58.3 | 58.3 | 58.4 | 58.4 | 58.4 | 58.4 | 58.5 | 58.5 |
| R32 | mass% | 17.7 | 18.1 | 18.5 | 18.5 | 18.6 | 18.6 | 19.4 | 20.0 |
| R152a | mass% | 23.9 | 22.0 | 19.8 | 19.8 | 19.1 | 19.1 | 14.7 | 11.5 |
| E-HFO-1 132 Approximation formula | | 0.0178a²-0.0285a+58.3 | | | 58.4 | | -0.0047a²+0.0815a+58.153 | | |
| R32 Approximation formula | | -0.0455a²+0.4227a+14.3 | | | 0.1667a+17.95 | | 0.0004a²+0.2245a+17.719 | | |
| R152a Approximation formula | | 0.0411a²-1.6206a+42.7 | | | -1.1667a+23.65 | | 0.0043a²-1.306a+24.128 | | |

It is understood, based on these results, that when coordinates (x,y,z) satisfy the following requirements in the refrigerant of the present disclosure, a disproportionation reaction does not occur at 5 MPa and 150°C, GWP is 150 or less, and a boiling point is -40°C or less.

### <Requirements>

The coordinates (x,y,z) are, when 0 < a ≤ 3.3, within the range of a figure surrounded by straight lines D'D, DJ, JK, and KD' that connect the following 4 points:
point D' (0.0178a²-0.0285a+58.3, -0.0455a²+0.4227a+14.3, 0.0411a²-1.6206a+42.7),
point D (57.0, 0.0, -a+43.0),
point J (0.3041a²-8.5491a+28.2, 0.0, - 0.3041a²+7.5491a+71.8), and
point K (0.254a²-6.6564a+19.2, 0.0568a²-1.2784a+9.0, - 0.3108a²+6.9348a+71.8), or

on the straight lines D'D, DJ, JK, and KD', and
   the coordinates (x,y,z) are, when 3.3 < a ≤ 3.9, within the range of a figure surrounded by straight lines D'D, DJ, JK, KB", and B"D' that connect the following 5 points:
   point D' (58.4, 0.1667a+17.95, -1.1667a+23.65),
   point D (57.0, 0.0, -a+43.0),
   point J (-5.5a+21.45, 0.0, 4.5a+78.55),
   point K (0.0, -9.0a+35.1, 8.0a+64.9), and
   point B" (0.0, 0.0018a²+0.2025a+4.6993, -0.018a²-1.2025a+95.301), or
on the straight lines D'D, DJ, JK, and B"D' (excluding the points K and B"), and
   the coordinates (x,y,z) are, when 3.9 < a ≤ 10.0, within the range of a figure surrounded by straight lines D'D, DO, OB", and B"D' that connect the following 4 points:
   point D' (-0.0047a²+0.0815a+58.153, 0.0004a²+0.2245a+17.719, 0.0043a²-1.306a+24.128),
   point D (57.0, 0.0, -a+43.0),
   point O (0.0, 0.0, -a+100), and
   point B" (0.0, 0.0018a²+0.2025a+4.6993, -0.018a²-1.2025a+95.301), or
on the straight lines D'D, DO, and B"D' (excluding the points O and B") .

It is understood from the test results described above that the same effects can be obtained by using HFO-1132(E) and/or HFO-1123 instead of HFO-1132(E) in the refrigerant of the present disclosure.

**[Table 31]**

| Item | | unit | Ref. Ex.3 | Com.Ex.0-18 | Com.Ex.0-19 | Com.Ex.0-20 | Com.Ex.0-21 | Com.Ex.0-22 | Com.Ex.0-23 | Com.Ex.0-24 |
|---|---|---|---|---|---|---|---|---|---|---|
| | | | | A" | B" | L | M | C | D' | D |
| Proportion of formulations | E-HFO-1132 | mass% | R404A | 77.9 | 0.0 | 25.9 | 16.9 | 60.0 | 57.0 | 58.3 |
| | R32 | mass% | | 22.1 | 4.7 | 0.0 | 8.5 | 40.0 | 0.0 | 17.7 |
| | R152a | mass% | | 0.0 | 95.3 | 74.1 | 74.6 | 0.0 | 43.0 | 23.9 |
| | CO2 | mass% | | 0.0 | 0,0 | 0.0 | 0.0 | 0.0 | 0.0 | 0.0 |
| GWP(AR4) | | - | 3922 | 150 | 150 | 92 | 150 | 271 | 54 | 150 |
| COP ratio(relative to R404A) | | % | 100 | 103 | 110 | 108 | 109 | 103 | 105 | 104 |
| Refrigerating capacity ratio(relative to R404A) | | % | 100 | 165 | 53 | 70 | 70 | 171 | 98 | 125 |

| Item | | unit | Ref. Ex.3 | Com.Ex.3-4 | Com.Ex.3-5 | Ex.3-4 | Ex.3-5 | Com.Ex.3-6 | Ex.3-6 | Ex.3-7 |
|---|---|---|---|---|---|---|---|---|---|---|
| | | | | A" | B" | L | M | C | D | D' |
| Proportion of formulations | E-HFO-1132 | mass% | R404A | 74.0 | 0.0 | 15.9 | 8.3 | 60.0 | 57.0 | 58.4 |
| | R32 | mass% | | 22.1 | 5.5 | 0.0 | 7.4 | 36.1 | 0.0 | 18.6 |
| | R152a | mass% | | 0.0 | 90.6 | 80.2 | 80.4 | 0.0 | 39.1 | 19.1 |
| | CO2 | mass% | | 3.9 | 3.9 | 3.9 | 3.9 | 3.9 | 3.9 | 3.9 |
| GWP(AR4) | | - | 3922 | 150 | 150 | 100 | 150 | 244 | 49 | 150 |
| COP ratio(relative to R404A) | | % | 100 | 102 | 108 | 108 | 108 | 102 | 104 | 102 |
| Refrigerating capacity ratio(relative to R404A) | | % | 100 | 176 | 61 | 70 | 70 | 180 | 110 | 141 |

**[Table 32]**

| Item | | unit | Ref. Ex.3 | Com.Ex.6-1 | Com.Ex.6-2 | Ex.6-1 | Com.Ex.6-3 | Ex.6-2 | Ex.6-3 |
|---|---|---|---|---|---|---|---|---|---|
| | | | | A" | B"=M | L | C | D | D' |
| Proportion of formulations | E-HFO-1132 | mass% | R404A | 70.2 | 0.0 | 6.3 | 60.0 | 57.0 | 58.5 |
| | R32 | mass% | | 22.1 | 6.4 | 0.0 | 32.3 | 0.0 | 19.5 |
| | R152a | mass% | | 0.0 | 85.9 | 86.0 | 0.0 | 35.3 | 14.3 |
| | CO2 | mass% | | 7.7 | 7.7 | 7.7 | 7.7 | 7.7 | 7.7 |
| GWP(AR4) | | - | 3922 | 150 | 150 | 107 | 219 | 44 | 150 |
| COP ratio(relative to R404A) | | % | 100 | 101 | 107 | 107 | 101 | 103 | 101 |
| Refrigerating capacity ratio(relative to R404A) | | % | 100 | 187 | 70 | 70 | 190 | 122 | 158 |

| Item | | unit | Ref. Ex.3 | Com.Ex.7-1 | Com.Ex.7-2 | Ex.7-1 | Ex.7-2 | Com.Ex.7-3 | Ex.7-3 | Ex.7-4 |
|---|---|---|---|---|---|---|---|---|---|---|
| | | | | A" | B" | L | M | C | D | D' |
| Proportion of formulations | E-HFO-1132 | mass% | R404A | 69.1 | 0.0 | 3.6 | 0.0 | 60.0 | 57.0 | 58.5 |
| | R32 | mass% | | 22.1 | 6.7 | 0.0 | 3.7 | 31.2 | 0.0 | 19.7 |
| | R152a | mass% | | 0.0 | 84.5 | 87.6 | 87.5 | 0.0 | 34.2 | 13.0 |
| | CO2 | mass% | | 8.8 | 8.8 | 8.8 | 8.8 | 8.8 | 8.8 | 8.8 |
| GWP(AR4) | | - | 3922 | 150 | 150 | 109 | 134 | 211 | 43 | 150 |
| COP ratio(relative to R404A) | | % | 100 | 101 | 107 | 107 | 107 | 101 | 103 | 101 |
| Refrigerating capacity ratio(relative to R404A) | | % | 100 | 190 | 73 | 70 | 70 | 193 | 126 | 163 |

**[Table 33]**

| Item | | unit | Ref. Ex.3 | Com.Ex.8-11 | Com.Ex.8-12 | Ex.8-5 | Ex.8-6 | Com.Ex.8-13 | Ex.8-7 | Ex.8-8 |
|---|---|---|---|---|---|---|---|---|---|---|
| | | | | A" | B" | L | M | C | D | D' |
| Proportion of formulations | E-HFO-1132 | mass% | R404A | 67.9 | 0.0 | 0.7 | 0.0 | 60.0 | 57.0 | 58.5 |
| | R32 | mass% | | 22.1 | 6.9 | 0.0 | 0.7 | 30.0 | 0.0 | 20.0 |
| | R152a | mass% | | 0.0 | 83.1 | 89.3 | 89.3 | 0.0 | 33.0 | 11.5 |
| | CO2 | mass% | | 10.0 | 10.0 | 10.0 | 10.0 | 10.0 | 10.0 | 10.0 |
| GWP(AR4) | | - | 3922 | 150 | 150 | 111 | 116 | 203 | 42 | 150 |
| COP ratio(relative to R404A) | | % | 100 | 101 | 107 | 107 | 107 | 101 | 102 | 101 |
| Refrigerating capacity ratio(relative to R404A) | | % | 100 | 194 | 76 | 70 | 70 | 196 | 130 | 169 |

**[Table 34]**

| Item | | unit | Ref. Ex.3 | Sam.6-12 | Sam.6-13 | Sam.6-14 | Sam.6-15 | Sam.6-16 | Sam.6-17 | Sam.6-18 | Sam.3-19 |
|---|---|---|---|---|---|---|---|---|---|---|---|
| Proportion of formulations | E-HFO-1132 | mass% | R404A | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 91.1 | 83.6 | 76.1 | 76.1 | 68.6 | 61.1 | 61.1 | 53.6 |
| | CO2 | mass% | | 3.9 | 3.9 | 3.9 | 3.9 | 3.9 | 3.9 | 3.9 | 3.9 |
| GWP(AR4) | | - | 3922 | 113 | 154 | 196 | 95 | 136 | 177 | 76 | 117 |
| COP ratio(relative to R404A) | | % | 100 | 108 | 108 | 108 | 107 | 107 | 107 | 106 | 106 |
| Refrigerating capacity ratio(relative to R404A) | | % | 100 | 60 | 67 | 74 | 74 | 81 | 89 | 88 | 96 |

| Item | | unit | Sam.3-20 | Sam.3-21 | Sam.3-22 | Sam.3-23 | Sam.3-24 | Sam.3-25 | Sam.3-26 | Sam.3-27 | Sam.3-28 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 53.6 | 53.6 | 41.1 | 46.1 | 36.1 | 26.1 | 31.1 | 21.1 | 6.1 |
| | CO2 | mass% | 3.9 | 3.9 | 3.9 | 3.9 | 3.9 | 3.9 | 3.9 | 3.9 | 3.9 |
| GWP(AR4) | | - | 117 | 117 | 186 | 58 | 113 | 168 | 39 | 94 | 177 |
| COP ratio(relative to R404A) | | % | 105 | 105 | 104 | 105 | 104 | 103 | 103 | 103 | 102 |
| Refrigerating capacity ratio(relative to R404A) | | % | 98 | 99 | 111 | 102 | 116 | 131 | 119 | 135 | 165 |
| Disproportionation reaction(5Mpa) | | - | - | - | - | Non-explosion | Non-explosion | Non-explosion | Explosion | Explosion | Explosion |

**[Table 35]**

| Item | | unit | Ref. Ex.3 | Sam.6-12 | Sam.6-13 | Sam.6-14 | Sam.6-15 | Sam.6-16 | Sam.6-17 | Sam.6-18 | Sam.3-19 |
|---|---|---|---|---|---|---|---|---|---|---|---|
| Proportion of formulations | E-HFO-1132 | mass% | R404A | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 87.3 | 79.8 | 72.3 | 72.3 | 64.8 | 57.3 | 57.3 | 49.8 |
| | CO2 | mass% | | 7.7 | 7.7 | 7.7 | 7.7 | 7.7 | 7.7 | 7.7 | 7.7 |
| GWP(AR4) | | - | 3922 | 108 | 150 | 191 | 90 | 131 | 173 | 71 | 113 |
| COP ratio(relative to R404A) | | % | 100 | 107 | 107 | 107 | 106 | 106 | 105 | 105 | 104 |
| Refrigerating capacity ratio(relative to R404A) | | % | 100 | 69 | 76 | 84 | 83 | 91 | 100 | 98 | 107 |

| Item | | unit | Sam.3-20 | Sam.3-21 | Sam.3-22 | Sam.3-23 | Sam.3-24 | Sam.3-25 | Sam.3-26 | Sam.3-27 | Sam.3-28 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 49.8 | 49.8 | 37.3 | 42.3 | 32.3 | 22.3 | 27.3 | 17.3 | 2.3 |
| | CO2 | mass% | 7.7 | 7.7 | 7.7 | 7.7 | 7.7 | 7.7 | 7.7 | 7.7 | 7.7 |
| GWP(AR4) | | - | 113 | 113 | 182 | 53 | 108 | 163 | 35 | 90 | 172 |
| COP ratio(relative to R404A) | | % | 104 | 104 | 103 | 104 | 103 | 102 | 102 | 102 | 101 |
| Refrigerating capacity ratio(relative to R404A) | | % | 110 | 111 | 124 | 114 | 128 | 145 | 132 | 150 | 183 |
| Disproportionation reaction(5Mpa) | | - | - | - | - | Non-explosion | Non-explosion | Non-explosion | Explosion | Explosion | Explosion |

**[Table 36]**

| Item | | unit | Ref. Ex.3 | Sam.7-12 | Sam.7-13 | Sam.7-14 | Sam.7-15 | Sam.7-16 | Sam.7-17 | Sam.7-18 | Sam.7-19 |
|---|---|---|---|---|---|---|---|---|---|---|---|
| Proportion of formulations | E-HFO-1132 | mass% | R404A | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 86.2 | 78.7 | 71.2 | 71.2 | 63.7 | 56.2 | 56.2 | 48.7 |
| | CO2 | mass% | | 8.8 | 8.8 | 8.8 | 8.8 | 8.8 | 8.8 | 8.8 | 8.8 |
| GWP(AR4) | | - | 3922 | 107 | 148 | 190 | 89 | 130 | 171 | 70 | 111 |
| COP ratio(relative to R404A) | | % | 100 | 107 | 107 | 106 | 106 | 106 | 105 | 105 | 104 |
| Refrigerating capacity ratio(relative to R404A) | | % | 100 | 71 | 79 | 87 | 86 | 95 | 103 | 101 | 111 |

| Item | | unit | Sam.7-20 | Sam.7-21 | Sam.7-22 | Sam.7-23 | Sam.7-24 | Sam.7-25 | Sam.7-26 | Sam.7-27 | Sam.7-28 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 48.7 | 48.7 | 36.2 | 41.2 | 31.2 | 21.2 | 26.2 | 16.2 | 1.2 |
| | CO2 | mass% | 8.8 | 8.8 | 8.8 | 8.8 | 8.8 | 8.8 | 8.8 | 8.8 | 8.8 |
| GWP(AR4) | | - | 111 | 111 | 180 | 52 | 107 | 162 | 33 | 88 | 171 |
| COP ratio(relative to R404A) | | % | 104 | 104 | 103 | 103 | 102 | 101 | 102 | 101 | 101 |
| Refrigerating capacity ratio(relative to R404A) | | % | 113 | 115 | 127 | 117 | 132 | 149 | 136 | 155 | 188 |
| Disproportionation reaction(5Mpa) | | - | - | - | - | Non-explosion | Non-explosion | Non-explosion | Explosion | Explosion | Explosion |

**[Table 37]**

| Item | | unit | Ref. Ex.3 | Sam.8-46 | Sam.8-47 | Sam.8-48 | Sam.8-49 | Sam.8-50 | Sam.8-51 | Sam.8-52 | Sam.8-53 |
|---|---|---|---|---|---|---|---|---|---|---|---|
| Proportion of formulations | E-HFO-1132 | mass% | R404A | 5.0 | 5.0 | 5.0 | 20.0 | 20.0 | 20.0 | 35.0 | 35.0 |
| | HFO-1123 | mass% | | 0.0 | 0.0 | 0.0 | 0.0 | 0.0 | 0.0 | 0.0 | 0.0 |
| | R32 | mass% | | 0.0 | 7.5 | 15.0 | 0.0 | 7.5 | 15.0 | 0.0 | 7.5 |
| | R152a | mass% | | 85.0 | 77.5 | 70.0 | 70.0 | 62.5 | 55.0 | 55.0 | 47.5 |
| | CO2 | mass% | | 10.0 | 10.0 | 10.0 | 10.0 | 10.0 | 10.0 | 10.0 | 10.0 |
| GWP(AR4) | | - | 3922 | 106 | 147 | 188 | 87 | 128 | 170 | 69 | 110 |
| COP ratio(relative to R404A) | | % | 100 | 107 | 106 | 106 | 106 | 105 | 105 | 104 | 104 |
| Refrigerating capacity ratio(relative to R404A) | | % | 100 | 74 | 82 | 90 | 90 | 98 | 107 | 105 | 114 |

| Item | | unit | Sam.8-54 | Sam.8-55 | Sam.8-56 | Sam.8-57 | Sam.8-58 | Sam.8-59 | Sam.8-60 | Sam.8-61 | Sam.8-62 |
|---|---|---|---|---|---|---|---|---|---|---|---|
| Proportion of formulations | E-HFO-1132 | mass% | 17.5 | 0.0 | 35.0 | 50.0 | 50.0 | 50.0 | 65.0 | 65.0 | 65.0 |
| | HFO-1123 | mass% | 17.5 | 35.0 | 0.0 | 0.0 | 0.0 | 0.0 | 0.0 | 0.0 | 0.0 |
| | R32 | mass% | 7.5 | 7.5 | 20.0 | 0.0 | 10.0 | 20.0 | 0.0 | 10.0 | 25.0 |
| | R152a | mass% | 47.5 | 47.5 | 35.0 | 40.0 | 30.0 | 20.0 | 25.0 | 15.0 | 0.0 |
| | CO2 | mass% | 10.0 | 10.0 | 10.0 | 10.0 | 10.0 | 10.0 | 10.0 | 10.0 | 10.0 |
| GWP(AR4) | | - | 110 | 110 | 179 | 50 | 105 | 160 | 32 | 87 | 170 |
| COP ratio(relative to R404A) | | % | 104 | 103 | 102 | 103 | 102 | 101 | 102 | 101 | 101 |
| Refrigerating capacity ratio(relative to R404A) | | % | 117 | 119 | 132 | 121 | 137 | 154 | 141 | 160 | 195 |
| Disproportionation reaction(5Mpa) | | - | - | - | - | Non-explosion | Non-explosion | Non-explosion | Explosion | Explosion | Explosion |

The coordinates of each point were obtained by the least squares method as follows.

**[Table 38]**

| Point L | | | | | | | |
|---|---|---|---|---|---|---|---|
| a=CO2 | mass% | 0.0 | 3.9 | 7.7 | 7.7 | 8.8 | 10.0 |
| E-HFO-1132 | mass% | 25.9 | 15.9 | 6.3 | 6.3 | 3.6 | 0.7 |
| R32 | mass% | 0.0 | 0.0 | 0.0 | 0.0 | 0.0 | 0.0 |
| R152a | mass% | 74.1 | 80.2 | 86.0 | 86.0 | 87.6 | 89.3 |
| E-HFO-1 132 Approximation formula | | -2.5455a+25.876 | | | -2.4345a+25.038 | | |
| R32 Approximation formula | | 0.0 | | | 0.0 | | |
| R152a Approximation formula | | 1.5455a+74.124 | | | 1.4345a+74.962 | | |

### Point M

| | | | | | | | |
|---|---|---|---|---|---|---|---|
| a=CO2 | mass% | 0.0 | 3.9 | 7.7 | 7.7 | 8.8 | 10.0 |
| E-HFO-1132 | mass% | 16.9 | 8.3 | 0.0 | 0.0 | 0.0 | 0.0 |
| R32 | mass% | 8.5 | 7.4 | 6.4 | 6.4 | 3.7 | 0.7 |
| R152a | mass% | 74.6 | 80.4 | 85.9 | 85.9 | 87.5 | 89.3 |
| E-HFO-1 132 Approximation formula | | 0.0027a²-2.2157a+16.9 | | | 0.0 | | |
| R32 Approximation formula | | 0.0025a²-0.2916a+8.5 | | | -0.0198a²-2.1285a+23.961 | | |
| R152a Approximation formula | | -0.0052a²+1.5073a+74.6 | | | 0.0198a²+1.1285a+76.039 | | |

In the above-described embodiment, when the mass% of HFO-1132(E), R32, HFC-152a, and CO₂ in the refrigerant of the present disclosure based on their sum are respectively represented by x, y, z, and a (wherein 0 < a ≤ 10.0), in a ternary composition diagram in which the sum of HFO-1132(E), R32, and HFC-152a is (100-a) mass%, if coordinates (x,y,z) satisfy the following requirements, a disproportionation reaction does not occur at 5 MPa and 150°C, GWP is 150 or less, and a refrigerating capacity (Cap) ratio relative to R404A is 70% or more.

### <Requirements>

The coordinates (x,y,z) are within the range of a figure surrounded by straight lines D'D, DL, LM, and MD' that connect the following 4 points:
point D' (0.0178a²-0.0285a+58.3, -0.0455a²+0.4227a+14.3, 0.0411a²-1.6206a+42.7) when 0 < a ≤ 3.3,
point D' (58.4, 0.1667a+17.95, -1.1667a+23.65) when 3.3 < a ≤ 3,9,
point D' (-0.0047a²+0.0815a+58.153, 0.0004a²+0.2245a+17.719, 0.0043a²-1.306a+24.128) when 3.9 < a ≤ 7.7, and
when 0 < a ≤ 7.7,
point D (57.0, 0.0, -a+43.0)
point L (-2.5455a+25.876, 0.0, 1.5455a+74.124), and
point M (0.0027a2-2.2157a+16.9, 0.0025a2-0.2916a+8.5, - 0.0052a2+1.5073a+74.6), or

on the straight lines D'D, DL, LM, and MD', and
   when 7.7 < a ≤ 10.0,
   the coordinates (x,y,z) are within the range of a figure surrounded by straight lines D'D, DL, LM, and MD' that connect the following 4 points:
      point D' (-0.0047a²+0.0815a+58.153, 0.0004a²+0.2245a+17.719, 0.0043a²-1.306a+24.128),
      point D (38.0, 0.0, -a+62.0),
      point L (-2.4345a+25.038, 0.0, 1.4345a+74.962), and
      point M (0.0, -0.0198a²-2.1285a+23.961, 0.0198a²+1.1285a+76.039), or
on the straight lines D'D, DL, LM, and MD'.

It is understood from the test results described above that the same effects can be obtained by using HFO-1132(E) and/or HFO-1123 instead of HFO-1132(E) in the refrigerant of the present disclosure.

## Claims

1. A composition comprising a refrigerant, wherein the refrigerant comprises
- a component X consisting only of trans-1,2-difluoroethylene (HFO-1132(E), or consisting only of trans-1,2-difluoroethylene (HFO-1132(E) and trifluoroethylene (HFO-1123),
- 1,1-difluoroethane (HFC-152a), and
- carbon dioxide (CO₂).

2. The composition of claim 1, wherein the refrigerant optionally further comprises R32, and
when the mass% of component X, R32, HFC-152a, and CO₂ in the refrigerant based on their sum are respectively represented by x, y, z, and a (wherein 0 < a ≤ 10.0), in a ternary composition diagram in which the sum of the component X, R32, and HFC-152a is (100-a) mass%, the coordinates (x,y,z) are within the range of a figure surrounded by straight lines CD, DO, OB, BA, and AC that connect the following 5 points:
when 0 < a ≤ 4.75,
| | |
|---|---|
| C | (60.0, -a+40.0, 0.0), |
| D | (57.0, 0.0, -a+43.0), |
| O | (0.0, 0.0, -a+100), |
| B | (0.0, -0.0257a²+0.3536a+50.00, 0.0257a²-1.3536a+50.00), |
| A | (-a+40.8, 59.2, 0.0), |
or on the straight lines CD, DO, and BA (excluding the points C, O, B, and A), and
when 4.75 < a ≤ 10.0,
| | |
|---|---|
| C | (60.0, -a+40.0, 0.0), |
| D | (57.0, 0.0, -a+43.0), |
| O | (0.0, 0.0, -a+100), |
| B | (0.0, -0.0137a2+0.4304a+49.364, 0.0137a2-1.4304a+50.636), |
| A | (-a+40.8, 59.2, 0.0), |
or on the straight lines CD, DO, and BA (excluding the points C, O, B, and A).

3. The composition of claim 2, wherein in the ternary diagram when 0 < a ≤ 4.75,
the coordinates (x,y,z) are within the range of a figure surrounded by straight lines CD, DE, EE', E'F, FB, BA and AC that connect the following 7 points:
| | |
|---|---|
| C | (60.0, -a+40.0, 0.0) |
| D | (57.0, 0.0, -a+43.0), |
| E | (-0.0046a²-3.3676a+50.70, 0.0, 0.0046a²+2.3676a+49.30), |
| E' | (-0.0019a²-2.5595a+12.2, -0.0013a²-0.373a+34.7, 0.0032a²+1.9325a+53.1), |
| F | (0.0, -0.0102a²-3.0461a+47.6, 0.0102a²+2.0461a+52.4), |
| B | (0.0, -0.0257a²+0.3536a+50.00, 0.0257a²-1.3536a+50.00), |
| A | (-a+40.8, 59.2, 0.0), |
or on the straight lines CD, DE, EE', E'F, and BA (excluding the points C, F, B, and A), and
when 4.75 < a ≤ 10.0
the coordinates (x,y,z) are within the range of a figure surrounded by straight lines CD, DE, EE', EF, FB, BA and AC that connect the following 6 points:
| | |
|---|---|
| C | (60.0, -a+40.0, 0.0) |
| D | (57.0, 0.0, -a+43.0), |
| E | (0.0018a²-3.5313a+51.333, 0.0, -0.0018a²+2.5313a+48.667), |
| F | (0.0, -0.0188a²-2.9037a+47.117, 0.0188a²+1.9037a+52.883), |
| B | (0.0, -0.0137a²+0.4304a+49.364, 0.0137a²-1.4304a+50.636), |
| A | (-a+40.8, 59.2, 0.0), |
or on the straight lines CD, DE, EF, FB, and BA (excluding the points C, F, B, and A).

4. The composition of claim 2, wherein in the ternary diagram when 0 < a ≤ 4.75,
the coordinates (x,y,z) are within the range of a figure surrounded by straight lines CD, DE, EE', and E'A' that connect the following 5 points:
| | |
|---|---|
| C | (60.0, -a+40.0, 0.0) |
| D | (57.0, 0.0, -a+43.0), |
| E | (-0.0046a²-3.3676a+50.70, 0.0, 0.0046a²+2.3676a+49.30), |
| E' | (-0.0019a²-2.5595a+12.2, -0.0013a²-0.373a+34.7, 0.0032a²+1.9325a+53.1), |
| A' | (-a+55.6, 44.4, 0.0), |
or on the straight lines CD, DE, EE', and E'A', and
when 4.75 < a ≤ 10.0,
the coordinates (x,y,z) are within the range of a figure surrounded by straight lines CD, DE, EF, FB', and B'A' that connect the following 6 points:
| | |
|---|---|
| C | (60.0, -a+40.0, 0.0) |
| D | (57.0, 0.0, -a+43.0), |
| E | (0.0018a²-3.5313a+51.333, 0.0, -0.0018a²+2.5313a+48.667), |
| F | (0.0, -0.0188a²-2.9037a+47.117, 0.0188a²+1.9037a+52.883), |
| B' | (0.0, -0.0137a2+0.4304a+31.164, 0.0137a2-1.4304a+68.836), |
| A' | (-a+55.6, 44.4, 0.0), |
or on the straight lines CD, DE, EF, and FA' (excluding the points C, F, and A').

5. The composition of claim 2, wherein in the ternary diagram when 0 < a ≤ 3.3,
coordinates (x,y,z) are within the range of a figure surrounded by straight lines D'D, DJ, JK, and KD' that connect the following 4 points:
| | |
|---|---|
| D' | (0.0178a²-0.0285a+58.3, -0.0455a²+0.4227a+14.3, 0.0411a²-1.6206a+42.7) |
| D | (57.0, 0.0, -a+43.0), |
| J | (0.3041a2-8.5491a+28.2, 0.0, -0.3041a2+7.5491a+71.8), |
| K | (0.254a²-6.6564a+19.2, 0.0568a²-1.2784a+9.0, - 0.3108a²+6.9348a+71.8), |
or on the straight lines D'D, DJ, JK, and KD', and
when 3.3 < a ≤ 3.9,
the coordinates (x,y,z) are within the range of a figure surrounded by straight lines D'D, DJ, JK, KB", and B"D' that connect the following 5 points:
| | |
|---|---|
| D' | (58.4, 0.1667a+17.95, -1.1667a+23.65), |
| D | (57.0, 0.0, -a+43.0), |
| J | (-5.5a+21.45, 0.0, 4.5a+78.55), |
| K | (0.0, -9.0a+35.1, 8.0a+64.9), |
| B" | (0.0, 0.0018a²+0.2025a+4.6993, -0.018a²-1.2025a+95.301), |
or on the straight lines D'D, DJ, JK, and B"D' (excluding the points K and B"), and
when 3.9 < a ≤ 10.0,
the coordinates (x,y,z) are within the range of a figure surrounded by straight lines D'D, DO, OB", and B"D' that connect the following 4 points:
| | |
|---|---|
| D' | (-0.0047a²+0.0815a+58.153, 0.0004a²+0.2245a+17.719, 0.0043a²-1.306a+24.128), |
| D | (57.0, 0.0, -a+43.0), |
| O | (0.0, 0.0, -a+100), |
| B" | (0.0, 0.0018a²+0.2025a+4.6993, -0.018a²-1.2025a+95.301), |
or on the straight lines D'D, DO, and B"D' (excluding the points O and B").

6. The composition of claim 2, wherein in the ternary diagram the coordinates (x,y,z) are within the range of a figure surrounded by straight lines D'D, DL, LM, and MD' that connect the following 4 points:
when 0 < a ≤ 7.7,
| | |
|---|---|
| D' | 0.0178a²-0.0285a+58.3, -0.0455a²+0.4227a+14.3, 0.0411a²-1.6206a+42.7) when 0 < a ≤ 3.3, (58.4, 0.1667a+17.95, -1.1667a+23.65) when 3.3 < a ≤ 3,9, (-0.0047a²+0.0815a+58.153, 0.0004a²+0.2245a+17.719, 0.0043a²-1.306a+24.128) when 3.9 < a ≤ 7.7, |
| D | (57.0, 0.0, -a+43.0) |
| L | (-2.5455a+25.876, 0.0, 1.5455a+74.124), and |
| M | (0.0027a2-2.2157a+16.9, 0.0025a2-0.2916a+8.5, - 0.0052a2+1.5073a+74.6), |
or on the straight lines D'D, DL, LM, and MD', and
when 7.7 < a ≤ 10.0,
the coordinates (x,y,z) are within the range of a figure surrounded by straight lines D'D, DL, LM, and MD' that connect the following 4 points:
| | |
|---|---|
| D' | (-0.0047a²+0.0815a+58.153, 0.0004a²+0.2245a+17.719, |
| | 0.0043a²-1.306a+24.128), |
| D | (38.0, 0.0, -a+62.0), |
| L | (-2.4345a+25.038, 0.0, 1.4345a+74.962), and |
| M | 0.0, -0.0198a²-2.1285a+23.961, 0.0198a²+1.1285a+76.039), |
or on the straight lines D'D, DL, LM, and MD'.

7. The use of the composition of any of claims 1-6 as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, or R1234ze.

8. A refrigeration apparatus comprising:
- a use side heat transfer cycle for circulating a use side refrigerant;
- a heat source side heat transfer cycle for circulating a heat source side refrigerant which is the composition of any of claims 1-6; and
- a cascade heat exchanger for performing heat exchange between the use side refrigerant and the heat source side refrigerant.

9. A refrigeration method comprising operating a refrigeration cycle using the composition of any of claims 1-6.

10. A refrigerating machine comprising the composition of any of claims 1-6 as a working fluid.

11. The use of HFO-1123, R32, R152a, and CO₂ for suppressing a disproportionation reaction of HFO-1132(E).

## Patentansprüche

1. Zusammensetzung, die ein Kältemittel umfasst, worin das Kältemittel umfasst
- eine Komponente X, die nur aus trans-1,2-Difluorethylen (HFO-1132 (E) besteht, oder die nur aus trans-1,2-Difluorethylen (HFO-1132 (E) und Trifluorethylen (HFO-1123) besteht,
- 1,1-Difluorethan (HFC-152a) und
- Kohlendioxid (CO₂).

2. Zusammensetzung gemäß Anspruch 1, worin das Kältemittel optional ferner R32 umfasst und
wenn die Masse-% der Komponente X, von R32, HFC-152a und CO₂ in dem Kältemittel, bezogen auf ihre Summe, durch x, y, z bzw. a (worin 0 < a ≤ 10,0 ist) dargestellt sind, in einem ternären Zusammensetzungsdiagramm, worin die Summe der Komponente X, von R32 und HFC-152a (100-a) Masse-% beträgt, die Koordinaten (x,y,z) innerhalb des Bereichs einer Figur liegen, die durch die graden Linien CD, DO, OB, BA und AC umrandet ist, welche die folgenden 5 Punkte verbinden:
wenn 0 < a ≤ 4,75,
| | |
|---|---|
| C | (60,0, -a+40,0, 0,0), |
| D | (57,0, 0,0, -a+43,0), |
| O | (0,0, 0,0, -a+100), |
| B | (0,0, -0,0257a²+0,3536a+50,00, 0,0257a²-1,3536a+50,00), |
| A | (-a+40,8, 59,2, 0,0), |
oder sie auf den graden Linien CD, DO und BA (ausgenommen die Punkte C, O, B und A) liegen, und
wenn 4,75 < a ≤ 10,0,
| | |
|---|---|
| C | (60,0, -a+40,0, 0,0), |
| D | (57,0, 0,0, -a+43,0), |
| O | (0,0, 0,0, -a+100), |
| B | (0,0, -0,0137a2+0,4304a+49,364, 0,0137a2-1,4304a+50,636), |
| A | (-a+40,8, 59,2, 0,0), |
oder sie auf den graden Linien CD, DO und BA liegen (ausgenommen die Punkte C, O, B und A).

3. Zusammensetzung gemäß Anspruch 2, worin in dem ternären Diagramm,
wenn 0 < a ≤ 4.75 ist,
die Koordinaten (x,y,z) innerhalb des Bereichs einer Figur liegen, die durch die graden Linien CD, DE, EE', E'F, FB, BA und AC umrandet ist, die die folgenden 7 Punkte verbinden:
| | |
|---|---|
| C | (60,0, -a+40,0, 0,0) |
| D | (57,0, 0,0, -a+43,0), |
| E | (-0,0046a²-3,3676a+50,70, 0,0, 0,0046a²+2,3676a+49,30), |
| E' | (-0,0019a²-2,5595a+12,2, -0,0013a²-0,373a+34,7, 0,0032a²+1,9325a+53,1), |
| F | (0,0, -0,0102a²-3,0461a+47,6, 0,0102a²+2,0461a+52,4), |
| B | (0,0, -0,0257a²+0,3536a+50,00, 0,0257a²-1,3536a+50,00), |
| A | (-a+40,8, 59,2, 0,0), |
oder sie auf den graden Linien CD, DE, EE', E'F und BA liegen (ausgenommen die Punkte C, F, B und A), und
wenn 4,75 < a ≤ 10,0
die Koordinaten (x,y,z) innerhalb des Bereichs einer Figur liegen, die von den graden Linien CD, DE, EE', EF, FB, BA und AC umrandet ist, die die folgenden 6 Punkte verbinden:
| | |
|---|---|
| C | (60,0, -a+40,0, 0,0) |
| D | (57,0, 0,0, -a+43,0), |
| E | (0,0018a²-3,5313a+51,333, 0,0, -0,0018a²+2,5313a+48,667), |
| F | (0,0, -0,0188a²-2,9037a+47,117, 0,0188a²+1,9037a+52,883), |
| B | (0,0, -0,0137a²+0,4304a+49,364, 0,0137a²-1,4304a+50,636), |
| A | (-a+40,8, 59,2, 0,0), |
oder sie auf den graden Linien CD, DE, EF, FB und BA liegen (ausgenommen die Punkte C, F, B und A),

4. Zusammensetzung gemäß Anspruch 2, worin in dem ternären Diagramm,
wenn 0 < a ≤ 4,75 ist,
die Koordinaten (x,y,z) innerhalb des Bereichs einer Figur liegen, die von den graden Linien CD, DE, EE' und E'A' umrandet ist, welche die folgenden 5 Punkte verbinden:
| | |
|---|---|
| C | (60,0, -a+40,0, 0,0) |
| D | (57,0, 0,0, -a+43,0), |
| E | (-0,0046a²-3,3676a+50,70, 0,0, 0,0046a²+2,3676a+49,30), |
| E' | (-0,0019a²-2,5595a+12,2, -0,0013a²-0,373a+34,7, 0,0032a²+1,9325a+53,1), |
| A' | (-a+55,6, 44,4, 0,0), |
oder sie auf den graden Linien CD, DE, EE' und E'A' liegen, und
wenn 4,75 < a ≤ 10,0 ist,
die Koordinaten (x,y,z) innerhalb des Bereichs einer Figur liegen, die von den graden Linien CD, DE, EF, FB' und B'A' umrandet ist, die die folgenden 6 Punkte verbinden:
| | |
|---|---|
| C | (60,0, -a+40,0, 0,0) |
| D | (57,0, 0,0, -a+43,0), |
| E | (0,0018a²-3,5313a+51,333, 0,0, -0,0018a²+2,5313a+48,667), |
| F | (0,0, -0,0188a²-2,9037a+47,117, 0,0188a²+1,9037a+52,883), |
| B' | (0,0, -0,0137a2+0,4304a+31,164, 0,0137a2-1,4304a+68,836), |
| A' | (-a+55,6, 44,4, 0,0), |
oder sie auf den graden Linien CD, DE, EF und FA' liegen (ausgenommen die Punkte C, F, and A').

5. Zusammensetzung gemäß Anspruch 2, worin in dem ternären Diagramm,
wenn 0 < a ≤ 3,3 ist,
die Koordinaten (x,y,z) innerhalb des Bereichs einer Figur liegen, die von den graden Linien D'D, DJ, JK und KD' umrandet ist, die die folgenden 4 Punkte verbinden:
| | |
|---|---|
| D' | (0,0178a²-0,0285a+58,3, -0,0455a²+0,4227a+14,3, 0,0411a²-1,6206a+42,7) |
| D | (57,0, 0,0, -a+43,0), |
| J | (0,3041a2-8,5491a+28,2, 0,0, -0,3041a2+7,5491a+71,8), |
| K | (0,254a²-6,6564a+19,2, 0,0568a²-1,2784a+9,0, -0,3108a²+6,9348a+71,8), |
oder sie auf den graden Linien D'D, DJ, JK und KD' liegen,
wenn 3,3 < a ≤ 3,9 ist,
die Koordinaten (x,y,z) innerhalb des Bereichs einer Figur liegen, die von den graden Linien D'D, DJ, JK, KB" und B"D' umrandet ist, die die folgenden 5 Punkte verbinden:
| | |
|---|---|
| D' | (58,4, 0,1667a+17,95, -1,1667a+23,65), |
| D | (57,0, 0,0, -a+43,0), |
| J | (-5,5a+21,45, 0,0, 4,5a+78,55), |
| K | (0,0, -9,0a+35,1, 8,0a+64,9), |
| B" | (0,0, 0,0018a²+0,2025a+4,6993, -0,018a²-1,2025a+95,301), |
oder sie auf den graden Linien D'D, DJ, JK und B"D' liegen (ausgenommen die Punkte K and B"), und
wenn 3,9 < a ≤ 10,0 ist,
die Koordinaten (x,y,z) innerhalb des Bereichs einer Figur liegen, die von den graden Linien D'D, DO, OB" und B"D' umrandet ist, welche die folgenden 4 Punkte verbinden:
| | |
|---|---|
| D' | (-0,0047a²+0,0815a+58,153, 0,0004a²+0,2245a+17,719, 0,0043a²-1,306a+24,128), |
| D | (57,0, 0,0, -a+43,0), |
| O | (0,0, 0,0, -a+100), |
| B" | (0,0, 0,0018a²+0,2025a+4,6993, -0,018a²-1,2025a+95,301), |
oder sie auf den graden Linien D'D, DO und B"D' liegen (ausgenommen die Punkte O und B").

6. Zusammensetzung gemäß Anspruch 2, worin in dem ternären Diagramm die Koordinaten (x,y,z) innerhalb des Bereichs einer Figur liegen, die von den graden Linien D'D, DL, LM und MD' umrandet ist, die die folgenden 4 Punkte verbinden:
wenn 0 < a ≤ 7,7 ist,
| | |
|---|---|
| D' | 0,0178a²-0,0285a+58,3, -0,0455a²+0,4227a+14,3, 0,0411a²-1,6206a+42,7), wenn 0 < a ≤ 3,3, (58,4, 0,1667a+17,95, -1,1667a+23,65), wenn 3,3 < a ≤ 3,9, (-0,0047a²+0,0815a+58,153, 0,0004a²+0,2245a+17,719, 0,0043a²-1,306a+24,128), wenn 3,9 < a ≤ 7,7, |
| D | (57,0, 0,0, -a+43,0) |
| L | (-2,5455a+25,876, 0,0, 1,5455a+74,124) und |
| M | (0,0027a2-2,2157a+16,9, 0,0025a2-0,2916a+8,5, -0,0052a2+1,5073a+74,6), |
oder sie auf den graden Linien D'D, DL, LM und MD' liegen, und
wenn 7,7 < a ≤ 10,0 ist,
die Koordinaten (x,y,z) innerhalb des Bereichs einer Figur liegen, die von den graden Linien D'D, DL, LM und MD' umrandet ist, die die folgenden 4 Punkte verbinden:
| | |
|---|---|
| D' | (-0,0047a²+0,0815a+58,153, 0,0004a²+0,2245a+17,719, 0,0043a²-1,306a+24,128), |
| D | (38,0, 0,0, -a+62,0), |
| L | (-2,4345a+25,038, 0,0, 1,4345a+74,962) und |
| M | 0,0, -0,0198a²-2,1285a+23,961, 0,0198a²+1,1285a+76,039), |
oder sie auf den graden Linien D'D, DL, LM und MD' liegen.

7. Verwendung der Zusammensetzung gemäß irgendeinem der Ansprüche 1-6 als ein alternatives Kältemittel für R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf oder R1234ze.

8. Kältevorrichtung, umfassend:
- einen Verwendungsseiten-Wärmetransferzyklus zum Zirkulieren eines Verwendungsseiten-Kältemittels;
- eine Wärmequellenseiten-Wärmetransferzyklus zum Zirkulieren eines Wärmequellenseiten-Kältemittelts, welche die Zusammensetzung gemäß irgendeinem der Ansprüche 1-6 ist, und
- einen Kaskaden-Wärmetauscher zum Durchführen eines Wärmeaustauschs zwischen dem Verwendungsseiten-Kältemittel und dem Wärmequellenseiten-Kältemittel.

9. Kühlverfahren, umfassend das Betreiben eines Kühlzyklus, bei dem die Zusammensetzung gemäß irgendeinem der Ansprüche 1-6 eingesetzt wird.

10. Kältemaschine, umfassend die Zusammensetzung gemäß irgendeinem der Ansprüche 1-6 als Arbeitsfluid.

11. Verwendung von HFO-1123, R32, R152a und CO₂ zum Unterdrücken einer Dispoportionierungsreaktion von HFO-1132(E).

## Revendications

1. Composition comprenant un réfrigérant, dans laquelle le réfrigérant comprend
- un composant X consistant uniquement en trans-1,2-difluoroéthylène (HFO-1132(E)), ou consistant uniquement en trans-1,2-difluoroéthylène (HFO-1132(E)) et trifluoroéthylène (HFO-1123),
- 1,1-difluoroéthane (HFC-152a), et
- dioxyde de carbone (CO₂).

2. Composition selon la revendication 1, dans laquelle le réfrigérant comprend en outre facultativement du R32, et
lorsque les % en masse du composant X, du R32, du HFC-152a et du CO₂ dans le réfrigérant sur la base de leur somme sont respectivement représentés par x, y, z et a (a étant tel que 0 < a ≤ 10,0), dans un diagramme de composition ternaire dans lequel la somme du composant X, du R32 et du HFC-152a est de (100-a) % en masse, les coordonnées (x, y, z) sont dans la plage d'une figure entourée par les droites CD, DO, OB, BA et AC qui relient les 5 points suivants :
lorsque 0 < a ≤ 4,75,
| | |
|---|---|
| C | (60,0, -a+40,0, 0,0), |
| D | (57,0, 0,0, -a+43,0), |
| O | (0,0, 0,0, -a+100), |
| B | (0,0, -0,0257a²+0,3536a+50,00, 0,0257a²-1,3536a+50,00), |
| A | (-a+40,8, 59,2, 0,0), |
ou sur les droites CD, DO et BA (à l'exclusion des points C, O, B et A), et
lorsque 4,75 < a ≤ 10,0,
| | |
|---|---|
| C | (60,0, -a+40,0, 0,0), |
| D | (57,0, 0,0, -a+43,0), |
| O | (0,0, 0,0, -a+100), |
| B | (0,0, -0,0137a²+0,4304a+49,364, 0,0137a²-1,4304a+50,636), |
| A | (-a+40,8, 59,2, 0,0), |
ou sur les droites CD, DO et BA (à l'exclusion des points C, O, B et A).

3. Composition selon la revendication 2, dans laquelle, dans le diagramme ternaire lorsque 0 < a ≤ 4,75,
les coordonnées (x, y, z) sont dans la plage d'une figure entourée par les droites CD, DE, EE', E'F, FB, BA et AC qui relient les 7 points suivants :
| | |
|---|---|
| C | (60,0, -a+40,0, 0,0) |
| D | (57,0, 0,0, -a+43,0), |
| E | (-0,0046a²-3,3676a+50,70, 0,0, 0,0046a²+2,3676a+49,30), |
| E' | (-0,0019a²-2,5595a+12,2, -0,0013a²-0,373a+34,7, 0,0032a²+1,9325a+53,1), |
| F | (0,0, -0,0102a²-3,0461a+47,6, 0,0102a²+2,0461a+52,4), |
| B | (0,0, -0,0257a²+0,3536a+50,00, 0,0257a²-1,3536a+50,00), |
| A | (-a+40,8, 59,2, 0,0), |
ou sur les droites CD, DE, EE', E'F et BA (à l'exclusion des points C, F, B et A), et lorsque 4,75 < a ≤ 10,0
les coordonnées (x, y, z) sont dans la plage d'une figure entourée par les droites CD, DE, EE', EF, FB, BA et AC qui relient les 6 points suivants :
| | |
|---|---|
| C | (60,0, -a+40,0, 0,0) |
| D | (57,0, 0,0, -a+43,0), |
| E | (0,0018a²-3,5313a+51,333, 0,0, -0,0018a²+2,5313a+48,667), |
| F | (0,0, -0,0188a²-2,9037a+47,117, 0,0188a²+1,9037a+52,883), |
| B | (0,0, -0,0137a²+0,4304a+49,364, 0,0137a²-1,4304a+50,636), |
| A | (-a+40,8, 59,2, 0,0), |
ou sur les droites CD, DE, EF, FB et BA (à l'exclusion des points C, F, B et A).

4. Composition selon la revendication 2, dans laquelle, dans le diagramme ternaire lorsque 0 < a ≤ 4,75,
les coordonnées (x, y, z) sont dans la plage d'une figure entourée par les droites CD, DE, EE', et E'A' qui relient les 5 points suivants :
| | |
|---|---|
| C | (60,0, -a+40,0, 0,0), |
| D | (57,0, 0,0, -a+43,0), |
| E | (-0,0046a²-3,3676a+50,70, 0,0, 0,0046a²+2,3676a+49,30), |
| E' | (-0,0019a²-2,5595a+12,2, -0,0013a²-0,373a+34,7, 0,0032a²+1,9325a+53,1), |
| A' | (-a+55,6, 44,4, 0,0), |
ou sur les droites CD, DE, EE' et E'A', et
lorsque 4,75 < a ≤ 10,0,
les coordonnées (x, y, z) sont dans la plage d'une figure entourée par les droites CD, DE, EF, FB', et B'A' qui relient les 6 points suivants :
| | |
|---|---|
| C | (60,0, -a+40,0, 0,0), |
| D | (57,0, 0,0, -a+43,0), |
| E | (0,0018a²-3,5313a+51,333, 0,0, -0,0018a²+2,5313a+48,667), |
| F | (0,0, -0,0188a²-2,9037a+47,117, 0,0188a²+1,9037a+52,883), |
| B' | (0,0, -0,0137a²+0,4304a+31,164, 0,0137a²-1,4304a+68,836), |
| A' | (-a+55,6, 44,4, 0,0), |
ou sur les droites CD, DE, EF et FA' (à l'exclusion des points C, F et A').

5. Composition selon la revendication 2, dans laquelle, dans le diagramme ternaire lorsque 0 < a ≤ 3,3,
les coordonnées (x, y, z) sont dans la plage d'une figure entourée par les droites D'D, DJ, JK et KD' qui relient les 4 points suivants :
| | |
|---|---|
| D' | (0,0178a²-0,0285a+58,3, -0,0455a²+0,4227a+14,3, 0,0411a²-1,6206a+42,7) |
| D | (57,0, 0,0, -a+43,0), |
| J | (0,3041a²-8,5491a+28,2, 0,0, -0,3041a2+7,5491a+71,8), |
| K | (0,254a²-6,6564a+19,2, 0,0568a²-1,2784a+9,0, -0,3108a²+6,9348a+71,8), |
ou sur les droites D'D, DJ, JK et KD', et,
lorsque 3,3 < a ≤ 3,9,
les coordonnées (x, y, z) sont dans la plage d'une figure entourée par les droites D'D, DJ, JK, KB", et B"D' qui relient les 5 points suivants :
| | |
|---|---|
| D' | (58,4, 0,1667a+17,95, -1,1667a+23,65), |
| D | (57,0, 0,0, -a+43,0), |
| J | (-5,5a+21,45, 0,0, 4,5a+78,55), |
| K | (0,0, -9,0a+35,1, 8,0a+64,9), |
| B" | (0,0, 0,0018a²+0,2025a+4,6993, -0,018a²-1,2025a+95,301), |
ou sur les droites D'D, DJ, JK et B"D' (à l'exclusion des points K et B"), et
lorsque 3,9 < a ≤ 10,0,
les coordonnées (x, y, z) sont dans la plage d'une figure entourée par les droites D'D, DO, OB", et B"D' qui relient les 4 points suivants :
| | |
|---|---|
| D' | (-0,0047a²+0,0815a+58,153, 0,0004a²+0,2245a+17,719, 0,0043a²- |
| | 1,306a+24,128), |
| D | (57,0, 0,0, -a+43,0), |
| O | (0,0, 0,0, -a+100), |
| B" | (0,0, 0,0018a²+0,2025a+4,6993, -0,018a²-1,2025a+95,301), |
ou sur les droites D'D, DO et B"D' (à l'exclusion des points O et B").

6. Composition selon la revendication 2, dans laquelle, dans le diagramme ternaire, les coordonnées (x, y, z) sont dans la plage d'une figure entourée par les droites D'D, DL, LM et MD' qui relient les 4 points suivants :
lorsque 0 < a ≤ 7,7,
| | |
|---|---|
| D' | 0,0178a²-0,0285a+58,3, -0,0455a²+0,4227a+14,3, 0,0411a²-1,6206a+42,7) lorsque 0 < a ≤ 3,3, (58,4, 0,1667a+17,95, -1,1667a+23,65) lorsque 3,3 < a ≤ 3,9, (-0,0047a²+0,0815a+58,153, 0,0004a²+0,2245a+17,719, 0,0043a²-1,306a+24,128) lorsque 3,9 < a ≤ 7,7, |
| D | (57,0, 0,0, -a+43,0), |
| L | (-2,5455a+25,876, 0,0, 1,5455a+74,124), et |
| M | (0,0027a²-2,2157a+16,9, 0.0025a²-0,2916a+8,5, - 0,0052a²+1,5073a+74,6), |
ou sur les droites D'D, DL, LM et MD', et
lorsque 7,7 < a ≤ 10,0,
les coordonnées (x, y, z) sont dans la plage d'une figure entourée par les droites D'D, DL, LM et MD' qui relient les 4 points suivants :
| | |
|---|---|
| D' | (-0,0047a²+0,0815a+58,153, 0,0004a²+0,2245a+17,719, 0,0043a²-1,306a+24,128), |
| D | (38,0, 0,0, -a+62,0), |
| L | (-2,4345a+25,038, 0,0, 1,4345a+74,962), et |
| M | 0,0, -0,0198a²-2,1285a+23,961, 0,0198a²+1,1285a+76,039), |
ou sur les droites D'D, DL, LM et MD'.

7. Utilisation de la composition selon l'une quelconque des revendications 1 à 6 en tant que réfrigérant de remplacement pour R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R474A, R479A, R502, R507, R513A, R1234yf, ou R1234ze.

8. Appareil de réfrigération, comprenant :
- un cycle de transfert de chaleur côté utilisation destiné à faire circuler un réfrigérant côté utilisation ;
- un cycle de transfert de chaleur côté source de chaleur destiné à faire circuler un réfrigérant côté source de chaleur qui est la composition selon l'une quelconque des revendications 1 à 6 ; et
- un échangeur de chaleur en cascade destiné à effectuer un échange de chaleur entre le réfrigérant côté utilisation et le réfrigérant côté source de chaleur.

9. Procédé de réfrigération comprenant le fait d'opérer un cycle de réfrigération en utilisant la composition selon l'une quelconque des revendications 1 à 6.

10. Machine de réfrigération comprenant la composition selon l'une quelconque des revendications 1 à 6 en tant que fluide de travail.

11. Utilisation de HFO-1123, de R32, de R152a et de CO₂ pour supprimer une réaction de dismutation de HFO-1132(E).
